# EUROPÄISCHE PATENTANMELDUNG

(11) **EP 4 646 958 A1**
(43) Veröffentlichungstag der Anmeldung: **12.11.2025**
(21) Anmeldenummer: 24174239.4
(22) Anmeldetag: 05.05.2024
(51) Int. Cl.: A44B 11/00

(54) **STECKSCHLIESSE ZUM LÖSBAREN VERBINDEN ZWEIER VERBINDUNGSPARTNER SOWIE GESCHIRR FÜR EIN HAUSTIER**

(71) Anmelder: Curli AG, 6331 Hünenberg (CH)
(72) Erfinder: Primus, Roland, 7078 Lenzerheide (CH)
(74) Vertreter: Wenzel Nemetzade Warthmüller Patentanwälte Part mbB

(57) **Zusammenfassung**

Steckschließe, insbesondere zum lösbaren Verbinden zweier Verbindungspartner oder zweier Textilabschnitte, mit einem Stecker, an welchem ein erster Verbindungspartner befestigbar ist, und mit einer Steckeraufnahme, an welchem ein zweiter Verbindungspartner befestigbar ist, wobei der Stecker zur lösbaren Verbindung in die Steckeraufnahme einsteckbar ist, wobei der Stecker eine Führungseinrichtung zum Zusammenführen von Stecker und Steckeraufnahme aufweist, wobei der Stecker mindestens eine Federeinrichtung zum sicheren Verrasten und Halten der Position des Steckers in der Steckeraufnahme aufweist und wobei die Führungseinrichtung in einer Höhenrichtung versetzt zur Federeinrichtung angeordnet ist.

## Beschreibung

Die Erfindung betrifft eine Steckschließe oder Schnalle zum lösbaren Verbinden zweier Verbindungspartner. Ebenso betrifft die Erfindung einen Stecker für eine Steckschließe und eine Steckeraufnahme für eine Steckschließe. Ferner betrifft die Erfindung ein Geschirr für ein Haustier mit mindestens einer Steckschließe sowie auch ein Halsband für ein Haustier mit einer Steckschließe.

Bekannte Steckschließen oder Schnallen weisen zwei Teile - einen sogenannten Male-Part oder Stecker und einen sogenannten Female-Part oder Steckeraufnahme - auf, die zum Schließen einer Steckschließe ineinandergesteckt werden.

Der Stecker verfügt über zwei gegenüberliegende Federhaken, die in zwei Rasten an der Steckeraufnahme einrasten können. Die Steckeraufnahme ist als Hohlkörper mit drei Öffnungen ausgebildet. Über eine Einsteck-Öffnung, die ähnlich einer Öffnung einer Flasche mit einem die Einsteck-Öffnung umschließenden Rahmen ausgebildet ist, ist der Stecker zum Verschließen einsteckbar. In Steckrichtung hinter der Einsteck-Öffnung befinden sich, versetzt zur Einsteck-Öffnung, zwei gegenüberliegende Rastöffnungen, in welche Federhaken des Steckers nach dem Durchführen durch die Einsteck-Öffnung einrasten können.

Zum Öffnen einer geschlossenen Steckschließe werden die gegenüberliegenden Federhaken aus den Rasten gedrückt beziehungsweise zusammengedrückt und gleichzeitig entgegen der Steckrichtung bewegt oder gedrückt, um die Federhaken des Steckers von der Steckeraufnahme zu lösen und aus der Einsteck-Öffnung zu schieben. Danach kann ein Nutzer keinen Einfluss mehr auf die Federhaken des Steckers ausüben, um die Verbindung vollständig zu lösen. Stattdessen bedarf es eines Ziehens am Stecker, der sich außerhalb der Steckeraufnahme befindet, um diesen von der Steckeraufnahme zu trennen beziehungsweise um diesen aus der Einsteck-Öffnung zu ziehen. Somit bedarf es entweder des Einsatzes zweier Hände eines Nutzers oder eines Umgreifens einer Hand.

Das Öffnen einer geschlossenen Steckschließe bedingt also ein Loslassen der Federhaken des Steckers, wodurch die Kontrolle eines Nutzers auf die Federhaken verloren geht oder stark eingeschränkt wird. Der Stecker kann dabei ohne nennenswert zusätzlichen Handhabungsaufwand in der Steckeraufnahme verbleiben. Ebenso kann zum Beispiel eine Unachtsamkeit des Nutzers dazu führen, dass der Stecker wieder weiter in die Steckeraufnahme zurückrutscht oder versehentlich geführt wird und die Steckschließe kann erneut verriegeln.

Ferner ist die Größe von Betätigungsflächen der Federhaken auf die Bauhöhe oder das Innenmaß der hohl ausgebildeten Steckeraufnahme beschränkt. Dies erschwert die Bedienung und somit die Einflussnahme eines Nutzers auf die Federhaken beziehungsweise auf die Betätigungsflächen der Federhaken.

Weiterhin sind Steckschließen bekannt, die eine gesonderte Führung zwischen Stecker und Steckschließe aufweisen. Eine solche Führung kann beispielsweise in einem Mittelabschnitt des Steckers beziehungsweise der Steckschließe vorgesehen sein. Hierdurch ergeben sich in Bezug auf die funktionale und konstruktive Ausgestaltung der Betätigungsflächen größere Freiheitsgrade. Jedoch kann bedingt durch eine solche Führung ein verhältnismäßig schwieriger Einfädelprozess erforderlich werden, wodurch die Handhabung und Bedienung einer solchen Steckschließe insgesamt erschwert wird.

Vor dem oben dargelegten Hintergrund ist es Aufgabe der vorliegenden Erfindung, eine Steckschließe oder Schnalle zum lösbaren Verbinden zweier Verbindungspartner anzugeben, welche eine verbesserte Handhabbarkeit beziehungsweise Bedienbarkeit durch einen Nutzer gewährleistet und die gleichzeitig kostengünstig und materialsparend herstellbar ist. Ebenso bestand die Aufgabe darin, einen Stecker für eine Steckschließe anzugeben. Schließlich bestand die Aufgabe darin, ein Geschirr für ein Haustier mit einer solchen Steckschließe anzugeben.

In Bezug auf die Steckschließe wurde diese Aufgabe durch die Merkmale des unabhängigen Patentanspruchs 1 gelöst. Eine erfindungsgemäße Steckschließe ist Gegenstand von Anspruch 14. Ein erfindungsgemäßes Geschirr ist Gegenstand von Anspruch 15. Weitere vorteilhafte Weiterbildungen sind Gegenstand der Unteransprüche und werden nachfolgend erläutert.

Ein erster Aspekt der vorliegenden Erfindung betrifft eine Steckschließe oder Schnalle, insbesondere zum lösbaren Verbinden zweier Verbindungspartner beziehungsweise zweier Textilabschnitte.

Eine erfindungsgemäße Steckschließe weist einen Stecker, an welchem ein erster Verbindungspartner befestigbar ist, und eine Steckeraufnahme, an welcher ein zweiter Verbindungspartner befestigbar ist, auf.

Der Stecker ist zur lösbaren Verbindung in die Steckeraufnahme einsteckbar, wobei der Stecker eine Führungseinrichtung zum Zusammenführen von Stecker und Steckeraufnahme aufweist. Ferner weist der Stecker mindestens eine Federeinrichtung zum sicheren Verrasten und Halten der Position des Steckers in der Steckeraufnahme auf.

Erfindungsgemäß ist nun vorgesehen, dass die Führungseinrichtung in einer Höhenrichtung versetzt zur Federeinrichtung angeordnet ist.

Durch eine derartige Ausgestaltung können geometrische Restriktionen zwischen der Federeinrichtung und der Führungseinrichtung verringert oder vollständig vermieden werden. Eine Federweg beziehungsweise Lösehub der Federeinrichtung wird durch eine erfindungsgemäße Ausgestaltung nicht oder in verringertem Umfang durch die Anordnung der Führungseinrichtung beeinträchtigt. Aufgrund dieses Umstandes kann die Führungseinrichtung verhältnismäßig lang beziehungsweise langgestreckt oder weit vorragend in Richtung des der Steckeraufnahme zugewandten Endes des Steckers ausgebildet werden. Eine entsprechend dimensionierte Führungseinrichtung erleichtert das Einfädeln mit korrespondierend geformten Abschnitten der Steckeraufnahme.

Eine Fehlbedienung, beispielsweise durch versehentliches Einführen eines Führungsstegs der Steckeraufnahme in einen Bereich zwischen der Führungseinrichtung und einer Federeinrichtung des Steckers, lässt sich auf diese Weise sicher vermeiden.

Ferner kann erfindungsgemäß ein Federweg, der die mindestens eine Federeinrichtung beim Einfedern und/oder beim Zusammenführen von Stecker und Steckeraufnahme in Richtung einer Mitte des Steckers und/oder in Richtung der Führungseinrichtung führt, vergrößert werden. Der Federweg kann sich in eine Breitenrichtung des Steckers erstrecken. Somit kann die Haltekraft des Steckers an der Steckeraufnahme verbessert beziehungsweise erhöht werden. Denn mindestens ein Schnapper einer lösbaren Schnappverbindung der Steckschließe, der an der Federeinrichtung und/oder an einem freikragenden Ende der Federeinrichtung anordenbar oder angeordnet ist, kann nun derart ausgestaltet werden, dass dieser im Vergleich zum Stand der Technik zum Einschnappen einen größeren Federweg zurücklegen muss. Dies führt zu einem verbesserten Zusammenhalt von Stecker und Steckeraufnahme in einer verbundenen Stellung.

Vorliegend kann es sich bei einer Längsrichtung um eine Richtung handeln, entlang der der Stecker und die Steckeraufnahme zusammengeführt und/oder voneinander getrennt werden.

Ferner kann es sich vorliegend bei einer Breitenrichtung um eine Richtung handeln, entlang der die mindestens eine Federeinrichtungen oder die Federeinrichtungen zwecks Lösen einer Schnappverbindung zwischen Stecker und Steckaufnahme bewegt oder aufeinander zubewegt werden.

Insbesondere kann sich die Führungseinrichtung entlang der Längsrichtung erstrecken und/oder eine Führung in Breitenrichtung gewährleisten.

Ferner kann es sich vorliegend bei einer Höhenrichtung um eine Richtung handeln, die sich unter einem Winkel und/oder um einen rechten Winkel zur Breitenrichtung und/oder unter einem Winkel zur Längsrichtung erstreckt.

Bei einer erfindungsgemäßen Steckschließe, einem Stecker und/oder einer Steckeraufnahme kann sich die Breite in Breitenrichtung, die Höhe in Höhenrichtung und/oder die Länge in Längsrichtung erstrecken. Die Steckschließe und/oder der Stecker und/oder die Steckeraufnahme können jeweils eine Breite, eine Höhe und eine Länge mit einer Erstreckung in der jeweiligen Richtung aufweisen.

Breitenrichtung, Höhenrichtung und Längsrichtung können insbesondere rechtwinklig zueinander orientiert sein, ähnlich einem dreidimensionalen Koordinatensystem.

Um zum Beispiel den Stecker in die Steckeraufnahme einzuführen muss der Stecker in Einsteckrichtung beziehungsweise entlang seiner Längsrichtung in die Steckeraufnahme eingesteckt werden.

Die Führungseinrichtung und die mindestens eine Federeinrichtung können in Breitenrichtung nebeneinander oder innerhalb einer Ebene oder in Reihe hintereinander angeordnet sein. Die Führungseinrichtung und/oder die mindestens eine Federeinrichtung können sich entlang der Längsrichtung erstrecken.

Die Längsrichtung kann sich ferner von einem Basisabschnitt des Steckers hin zur und/oder entlang der Führungseinrichtung und/oder hin zu einem freikragenden Ende eines Führungsfingers der Führungseinrichtung erstrecken. Die Breitenrichtung kann sich quer zur Länge oder Längsrichtung und zur Höhe der Führungseinrichtung erstrecken.

Die Höhe oder Höhenrichtung kann sich, insbesondere senkrecht, zur Längserstreckung und/oder Breitenerstreckung der mindestens einen Federeinrichtung und/oder der Führungseinrichtung erstrecken.

Gemäß einer bevorzugten Ausgestaltung können die Führungseinrichtung und die mindestens eine Federeinrichtung gesondert und/oder separat ausgebildet sein und/oder voneinander in Breitenrichtung beabstandet sein. Dies ermöglicht einen vergrößerten Gestaltungsspielraum der Führungseinrichtung gegenüber der mindestens einen Federeinrichtung. Die Führungseinrichtung kann ausschließlich im Hinblick auf eine Führungsfunktionalität ausgebildet sein.

Zusätzlich oder alternativ kann die Führungseinrichtung zwei freikragende Enden aufweisen, die jeweils von einem Führungsfinger der Führungseinrichtung gebildet werden können und/oder die gesondert und/oder separat von der mindestens einen Federeinrichtung ausgebildet und/oder beabstandet sein können. Somit kann der Gestaltungsspielraum der Führungseinrichtung gegenüber der mindestens einen Federeinrichtung vergrößert werden. Zwei freikragende Enden an Führungsfingern ermöglichen in vorteilhafter Weise ein Einfädeln eines korrespondierenden Abschnitts der Steckeraufnahme und somit ein handhabungsfreundliches Zusammenführen von Stecker und Steckeraufnahme.

Außerdem kann vorgesehen sein, dass die Steckschließe eine Führungseinrichtung zum Zusammenführen von Stecker und Steckeraufnahme aufweist, wobei die Führungseinrichtung von einem Basisabschnitt des Steckers vorspringen kann und/oder wobei die Führungseinrichtung in Form zweier Gabelzinken ausgebildet sein kann. Die Führungseinrichtung kann das Zusammenführen von Stecker und Steckeraufnahme nicht nur vereinfachen, sondern auch einen sicheren Halt des Steckers in der Steckeraufnahme gewährleisten.

Des Weiteren kann die Führungseinrichtung zwei zueinander beabstandete Führungsfinger aufweisen, die gesondert und/oder separat von der mindestens einen Federeinrichtung und/oder gesondert und/oder separat voneinander ausgebildet sein können. Zusätzlich oder alternativ kann die Führungseinrichtung zwei zueinander beabstandete Führungsfinger aufweisen, die gesondert von den mindestens einem Schnapper ausgebildet sein können und/oder zwischen welchen ein Führungssteg der Steckeraufnahme einbringbar und führbar ist. Somit kann also eine sichere Führung realisiert werden.

Auch kann die Führungseinrichtung oder können die Führungsfinger freikragend ausgebildet sein. Die freikragenden Enden der Führungsfinger können dazu ausgebildet sein, dass diese zusammen eine Trichterform bilden, welche ein Einführen eines Führungsstegs der Steckeraufnahme erleichtert. Somit gewährleistet die Trichterform eine einfaches Einführen des Steckers in die Steckeraufnahme.

Außerdem ist es möglich, dass an den freikragenden Enden der Führungsfinger gegenüberliegende Seitenflächen der Führungsfinger gegeneinander geneigt sind, um eine Trichterform zu bilden. Es kann auch vorgesehen sein, dass an den freikragenden Enden der Führungsfinger das breite Ende der Trichterform einer von den Führungsfingern gebildeten Trichterform ausbildet ist und/oder dass die gebildete Trichterform von den freikragenden Enden der Führungsfinger in Richtung eines Basisabschnitts des Steckers verengend zuläuft. Mithilfe dieser Ausgestaltung ist das Einfangen eines Führungsstegs der Steckeraufnahme am offenen Ende der Trichterform auf einfache Weise möglich, wobei die zulaufende Trichterform eine im weiteren Verlauf der Trichterform genauere Führung des Führungsstegs sicherstellen kann.

Des Weiteren kann jeder Führungsfinger brettförmig ausgebildet sein. Auch kann jeder Führungsfinger eine Oberseite, eine Unterseite und weitere Seitenflächen aufweisen, die die Oberseite mit der Unterseite verbinden können.

In bevorzugter Weise kann die mindestens eine Federeinrichtung in einer ersten Höhenebene angeordnet sein und/oder die Führungseinrichtung und/oder zumindest ein Führungsfinger der Führungseinrichtung kann in einer zweiten und/oder dritten Höhenebene angeordnet sein. Zur Vergrößerung des Federwegs der mindestens einen Federeinrichtung können die erste und/oder zweite und/oder dritte Höhenebene in einer Höhenrichtung des Steckers versetzt zueinander angeordnet sein.

Die mindestens eine Federeinrichtung kann bei einem Einfedern in Breitenrichtung verschiebbar und/oder schiebbar und/oder bewegbar und/oder einfederbar sein, wobei ein solches Einfedern in Höhenrichtung unterhalb und/oder oberhalb der Führungseinrichtung und/oder eines Führungsfingers der Führungseinrichtung und/oder zwischen zwei Führungsfingern der Führungseinrichtung erfolgen kann. Mithin kann in Höhenrichtung sowohl oberhalb als auch unterhalb der Federeinrichtung eine Führungseinrichtung, beispielsweise durch Führungsfinger gebildet, vorgesehen sein.

Außerdem können sowohl in einem eingefederten Zustand der mindestens Federeinrichtung als auch in einem ausgefederten oder in einem unbelasteten und/oder kraftfreien Zustand die mindestens eine Federeinrichtung und die Führungseinrichtung, insbesondere kontaktlos, voneinander, zum Beispiel in Höhenrichtung und/oder in Breitenrichtung, beabstandet sein. Dies kann insbesondere auch für die Federeinrichtung und Führungsfinger der Führungseinrichtung gelten. Somit kann der Einfluss resultierend aus einer relativen Bewegung von Federeinrichtung zu Führungseinrichtung auf den jeweiligen anderen reduziert oder gar gänzlich verhindert werden.

Des Weiteren kann vorgesehen sein, dass die mindestens eine Federeinrichtung und die Führungseinrichtung geometrisch dazu angeordnet und/oder ausgebildet und/oder dimensioniert sind, dass die mindestens eine Federeinrichtung in Richtung der Führungseinrichtung einfedern und in die entgegengesetzte Richtung zurückfedern kann. Mit anderen Worten ausgedrückt, können die mindestens eine Federeinrichtung und die Führungseinrichtung konstruktiv derart ausgestaltet sein, dass diese sich bei einer Bewegung der mindestens einen Federeinrichtung relativ zur Führungseinrichtung nicht berühren oder in ihrer Bewegung behindern.

Ferner kann die mindestens eine Federeinrichtung frei von geometrischen Restriktionen, insbesondere frei von geometrischen Restriktionen durch die Führungseinrichtung, in Richtung der Führungseinrichtung einfedern und in die entgegengesetzte Richtung zurückfedern. Somit können sich die mindestens eine Federeinrichtung und die Führungseinrichtung relativ zueinander bewegen, wobei sie sich nicht berühren oder in ihrer Bewegung behindern. Die mindestens eine Federeinrichtung und der Führungsfinger der Führungseinrichtung können einander zugewandt gegenüberliegend angeordnet sein.

Außerdem kann der Stecker mindestens eine Betätigungseinrichtung zum Lösen der Verbindung von Stecker und Steckeraufnahme aufweisen.

Die mindestens eine Betätigungseinrichtung kann eine Betätigungsfläche zur manuellen Betätigung durch einen Nutzer aufweisen. Die Betätigungsfläche kann dabei während einer Relativbewegung von Stecker und Steckeraufnahme ausgehend von einer verbundenen Stellung bis in eine vollständig getrennte Stellung von Stecker und Steckeraufnahme permanent oder während des kompletten Lösevorgangs durch einen Nutzer kontaktierbar bleiben.

Folglich kann der Stecker während des Lösevorgangs der Steckschließe in der Hand eines Nutzers haltbar bleiben. Somit ist ein permanentes Halten und Kontrollieren des Steckers der Steckschließe während des Öffnens der Steckschließe gewährleistet, was einen entscheidenden Vorteil bei der Handhabung bietet. Zudem bedarf es weder des Einsatzes zweier Hände eines Nutzers noch eines Umgreifens einer Hand. Vielmehr ist die erfindungsgemäße Steckschließe mit einer Hand eines Nutzers öffenbar, ohne dass der Stecker losgelassen werden muss, um den Löse- beziehungsweise Öffnungsvorgang oder gar einen Schließvorgang zu vollenden.

Des Weiteren kann aufgrund dieser Ausgestaltung die mindestens eine Betätigungseinrichtung im Vergleich zum Stand der Technik größer und/oder großflächiger ausgebildet sein, da beim Einführen des Steckers in die Steckeraufnahme oder beim Ausführen des Steckers aus der Steckeraufnahme ein permanentes Kontaktieren der Betätigungsflächen möglich ist. Dadurch verbleiben die Betätigungsflächen und/oder die mindestens eine Betätigungseinrichtung außerhalb der Steckeraufnahme. Dies gilt sowohl für eine verbundene Stellung als auch für eine vollständig getrennte Stellung.

Zudem kann die Steckeraufnahme drei aneinander angrenzende Seiten oder Seitenflächen umfassen, die gemeinsam eine einzige Öffnung zum Einführen des Steckers in einen Innenraum der Steckeraufnahme bilden. Die Öffnung kann ununterbrochen und/oder an den drei aneinander angrenzende Seiten umlaufend und/oder an den drei aneinander angrenzende Seiten einen einzigen umlaufenden Rand und/oder entlang der angrenzenden Seiten durchgehend offen ausgebildet sein. Somit bilden die drei aneinander angrenzende Seiten eine einzige zusammenhängende Öffnung für die Aufnahme des Steckers im Inneren oder im Innenraum der Steckeraufnahme.

Eine solche Ausgestaltung erlaubt es, die mindestens eine Betätigungseinrichtung im Vergleich zum Stand der Technik größer und/oder großflächiger auszubilden, da beim Einführen des Steckers in die Steckeraufnahme oder beim Ausführen des Steckers aus der Steckeraufnahme ein permanentes Kontaktieren der Betätigungsflächen möglich ist. Dadurch verbleiben die Betätigungsflächen und/oder die mindestens eine Betätigungseinrichtung außerhalb der Steckeraufnahme. Dies gilt sowohl für eine verbundene Stellung als auch für eine vollständig getrennte Stellung.

Des Weiteren kann die mindestens eine Betätigungseinrichtung einen oder einen einzigen Verbindungsabschnitt aufweisen, der mit mindestens einer Federeinrichtung des Steckers verbunden und/oder einstückig ausgebildet ist. Auch kann die mindestens eine Betätigungseinrichtung einen Verbindungsabschnitt aufweisen, der die mindestens eine Federeinrichtung des Steckers und die Betätigungsfläche zur manuellen Betätigung durch einen Nutzer voneinander beabstandet. Somit kann eine manuelle Betätigungskraft von der mindestens einen Betätigungseinrichtung auf die mindestens eine Federeinrichtung des Steckers übertragen werden. Zudem wird mithilfe dieser Ausgestaltung die Herstellung der Steckschließe vereinfacht.

Es kann weiterhin vorgesehen sein, dass die mindestens eine Betätigungseinrichtung ausschließlich über den oder einen Verbindungsabschnitt mit der mindestens einen Federeinrichtung des Steckers verbunden ist und/oder dass die mindestens eine Betätigungseinrichtung über einen einzigen Verbindungsabschnitt mit der mindestens einen Federeinrichtung des Steckers verbunden ist und/oder dass die mindestens eine Betätigungseinrichtung ausschließlich über den Verbindungsabschnitt und der mindestens einen Federeinrichtung mit einem Basisabschnitt des Steckers verbunden ist. Ein Basisabschnitt des Steckers kann an einem rückwärtigen Ende des Steckers ausgebildet sein, das von der Einsteckrichtung oder Einsteckorientierung abgewandt ist. In Bezug auf die Ausgestaltung und Anordnung der Betätigungseinrichtung beziehungsweise der Betätigungsfläche der Betätigungsanordnung ergeben sich hiermit größere Freiheitsgrade und Konstruktionsspielräume.

Außerdem ist es möglich, dass die Führungseinrichtung mindestens eine Versteifungsrippe zur Versteifung eines Führungsfingers der Führungseinrichtung aufweist und/oder dass die mindestens eine Versteifungsrippe quer zu einer Längsrichtung, insbesondere quer zu einer Längsrichtung der Führungseinrichtung, die Führungseinrichtung versteift. Somit können Kräfte kompensiert und die Steckschließe robuster ausgestaltet werden.

Ferner kann die mindestens eine Versteifungsrippe in Höhenrichtung gesehen auf einer Oberseite und/oder einer Unterseite eines Führungsfingers angeordnet sein. Ferner kann die mindestens eine Versteifungsrippe unterhalb und/oder oberhalb eines Führungsfingers der Führungseinrichtung angeordnet sein. Somit kann die Widerstandfähigkeit gegen Biegung optimal verbessert werden. Insbesondere die Biegbarkeit des Führungsfingers um eine in Breitenrichtung verlaufende Achse wird dadurch sicher vermieden oder verringert, wodurch die Funktionalität mit erhöhter Betriebssicherheit bereitgestellt werden kann.

Ferner kann die mindestens eine Versteifungsrippe von einem Basisabschnitt des Steckers vorspringen und/oder sich in Längsrichtung eines jeweiligen Führungsfingers der Führungseinrichtung erstrecken. Somit ist also mindestens ein Führungsfinger gegen Biegung versteifbar, wodurch dieser robuster ausgestaltet ist und wodurch die Lebensdauer der Steckschließe erhöhbar ist.

Zudem kann vorgesehen sein, dass die mindestens eine Versteifungsrippe mit einem Führungsfinger der Führungseinrichtung verbunden oder einstückig ausgebildet ist. Dies vereinfacht die Herstellung und verbessert - wie schon erwähnt - die Stabilität der Führungseinrichtung.

Des Weiteren kann sich die mindestens eine Versteifungsrippe wenigstens über 30 Prozent und/oder höchstens über 70 Prozent der Länge der Führungseinrichtung oder deren Führungsfinger in Längsrichtung erstrecken. Somit kann eine mechanisch stabile Ausführung bei geringem Materialaufwand geschaffen werden.

Zudem kann die mindestens eine Versteifungsrippe eine Dicke, eine Höhe und eine Länge aufweisen. Dabei kann sich die Höhe, insbesondere senkrecht, von einem Führungsfinger der Führungseinrichtung wegerstrecken. Die Länge kann sich in Längsrichtung erstrecken und/oder von einem Basisabschnitt des Steckers hin zu einem freikragenden Ende eines Führungsfingers erstrecken. Die Breite kann sich quer zur Länge oder Längsrichtung und zur Höhe der mindestens einen Versteifungsrippe erstrecken.

Außerdem kann vorgesehen sein, dass die mindestens eine Versteifungsrippe in Längsrichtung eine gleichbleibende Breite und/oder eine gleichbleibende Höhe aufweist und/oder dass die mindestens eine Versteifungsrippe in Seitenansicht rechteckförmig ausgebildet ist. Somit kann die mindestens eine Versteifungsrippe auf einfache Weise konstruktiv ausgestaltet werden.

Des Weiteren kann die mindestens eine Versteifungsrippe entsprechend des Momentenverlaufs eines freikragenden Trägers ausgebildet sein. Auch kann die mindestens eine Versteifungsrippe dreiecksförmig ausgebildet sein und/oder in Längsrichtung eine abnehmende Höhe aufweisen. Folglich kann die mindestens eine Versteifungsrippe nicht nur einfach, sondern auch materialsparend erstellt werden.

Die mindestens eine Federeinrichtung und/oder die mindestens eine Federeinrichtung zusammen mit mindestens einem Schnapper einer lösbaren Schnappverbindung kann in Längsrichtung die Führungseinrichtung und/oder mindestens einen Führungsfinger der Führungseinrichtung überragen.

Die mindestens eine Federeinrichtung und/oder die mindestens eine Federeinrichtung zusammen mit mindestens einem Schnapper einer lösbaren Schnappverbindung kann in Längsrichtung eine Länge aufweisen, die höchstens 150 % oder höchstens 140 % oder höchstens 130 % oder höchstens 120 % oder höchstens 110 % der Länge der Führungseinrichtung und/oder der Länge mindestens eines Führungsfingers der Führungseinrichtung in Längsrichtung entspricht.

Ferner kann die mindestens eine Federeinrichtung und/oder die mindestens eine Federeinrichtung zusammen mit mindestens einem Schnapper einer lösbaren Schnappverbindung in Längsrichtung eine Länge aufweisen, die wenigstens 160 % oder wenigstens 150 % oder wenigstens 140 % oder wenigstens 130 % oder wenigstens 120 % oder wenigstens 110 % der Länge der Führungseinrichtung und/oder der Länge mindestens eines Führungsfingers der Führungseinrichtung in Längsrichtung entspricht.

Durch vorgenannten Ausgestaltungen kann das Einfädeln zwischen dem Stecker und der Steckeraufnahme vereinfacht werden. Insbesondere lässt sich bei derartigen Längenproportionen die Gefahr von fehlerhaften Einfädelstellungen vermeiden. Geringe Längenunterschiede zwischen der Federeinrichtung und der Führungseinrichtung gewährleisten, dass die Federeinrichtung und die Führungseinrichtung im Wesentlichen zeitgleich mit den jeweils komplementären Abschnitten oder Flächen der Steckeraufnahme in Kontakt oder in Eingriff gelangen.

Die mindestens eine Federeinrichtung und/oder die mindestens eine Federeinrichtung zusammen mit mindestens einem Schnapper einer lösbaren Schnappverbindung der Steckschließe kann eine maximale Breite in Breitenrichtung aufweisen, die wenigstens 80% oder wenigstens 90% oder wenigstens 100 % oder wenigstens 110 % der Breite der Führungseinrichtung und/oder der Breite mindestens eines Führungsfingers der Führungseinrichtung in Breitenrichtung entspricht. Somit kann die Stabilität der Steckschließe erhöht werden.

Die mindestens eine Federeinrichtung und/oder die mindestens eine Federeinrichtung zusammen mit mindestens einem Schnapper einer lösbaren Schnappverbindung der Steckschließe kann eine maximale Breite in Breitenrichtung aufweisen, die höchstens 120 % oder höchstens 110 % oder höchstens 100 % der Führungseinrichtung und/oder der Breite mindestens eines Führungsfingers der Führungseinrichtung in Breitenrichtung entspricht. Auf diese Weise ist die Stabilität der Steckschließe erhöhbar.

Die mindestens eine Betätigungseinrichtung kann eine Höhe in Höhenrichtung aufweisen, die wenigstens 50 % oder wenigstens 60 % oder wenigstens 70% oder wenigstens 80% oder wenigstens 90% der Länge der mindestens einen Federeinrichtung und/oder der Länge, zusammengesetzt aus der mindestens einen Federeinrichtung und mindestens einem Schnapper einer lösbaren Schnappverbindung der Steckschließe, in Längsrichtung entspricht.

Ferner kann die mindestens eine Betätigungseinrichtung eine Höhe in Höhenrichtung aufweisen, die höchstens 150 % oder höchstens 140 % oder höchstens 130 % oder höchstens 120 % oder höchstens 110% oder höchstens 100% der Länge der mindestens einen Federeinrichtung und/oder der Länge, zusammengesetzt aus der mindestens einen Federeinrichtung und mindestens einem Schnapper einer lösbaren Schnappverbindung der Steckschließe, in Längsrichtung entspricht.

In beiden vorgenannten Fällen kann eine Steckschließe geschaffen werden, die eine ausreichende Höhe aufweist, mit welcher ein Schließvorgang von Stecker und Steckeraufnahme einfach für einen Nutzer handhabbar ist.

Auch kann die Betätigungsfläche höher als die Öffnung oder der Innenraum der Steckeraufnahme sein. So kann jede Betätigungsfläche oder jede Betätigungseinrichtung eine Höhe aufweisen, die mit der Höhe der Steckeraufnahme korrespondiert, sodass die mindestens eine Betätigungseinrichtung uneinführbar in die Öffnung oder den Innenraum der Steckeraufnahme ist. Anders ausgedrückt, ist ein Druckknopf beziehungsweise die mindestens eine Betätigungseinrichtung größer als der Innenraum, wodurch diese nicht in den Innenraum eingeführt werden können.

Außerdem kann die Steckeraufnahme in ihrem Inneren einen Innenraum aufweisen, der von mehreren Seiten und/oder Seitenflächen eingegrenzt oder begrenzt oder umgeben wird. Der Innenraum kann ausgebildet sein, den Stecker aufzunehmen.

Zur Aufnahme des Steckers kann die Steckeraufnahme in ihrem Inneren zumindest abschnittsweise hohl ausgebildet sein und/oder der Innenraum zur Aufnahme des Steckers zumindest abschnittsweise hohl ausgebildet sein. Somit ist die Aufnahme des Steckers und die Realisierung einer verbundenen Stellung von Stecker und Steckeraufnahme möglich.

Ferner kann die Steckeraufnahme drei aneinander angrenzende Seiten oder Seitenflächen umfassen, die einen frei von seitlichen Begrenzungen ausgebildeten Zugang in einen Innenraum der Steckeraufnahme bilden. Auch kann die Steckeraufnahme drei aneinander angrenzende Seiten oder Seitenflächen umfassen, die zusammen eine einzige gemeinsame seitliche Begrenzung, wie zum Beispiel einen Rand eines Zugangs oder einer Öffnung, für einen Zugang oder als einen Zugang in einen Innenraum der Steckeraufnahme bilden.

Dabei können von den drei aneinander angrenzenden Seiten zwei gegenüberliegend angeordnet sein und die weitere Seite die beiden gegenüberliegenden Seiten miteinander verbinden. Dadurch ist der Innenraum der Steckeraufnahme von drei Seiten für die Aufnahme eines Steckers der Steckschließe ausgebildet und/oder zugänglich. Diese Ausgestaltung führt neben der vereinfachten Bedienung einer Steckschließe auch zu Materialeinsparungen.

Zudem kann eine Basisabschnittsseite, eine Oberseite und eine Unterseite der Steckeraufnahme undurchdringlich für den Stecker ausgebildet sein. Über die genannten Seiten ist das Einführen des Steckers in die Steckaufnahme nicht möglich. Vielmehr können diese zur gegenständlichen Ausbildung der Steckeraufnahme genutzt werden.

Ferner kann die Steckeraufnahme eine erste Riegelseite, eine zweite Riegelseite, eine Einführseite, eine Oberseite, eine Unterseite und eine Basisabschnittsseite umfassen. Die erste Riegelseite, die zweite Riegelseite und die Einführseite können aneinander angrenzen und gemeinsam eine einzige Öffnung in das Innere oder in einen Innenraum der Steckeraufnahme bilden. Bei der einzigen Öffnung bilden die erste Riegelseite, die zweite Riegelseite und die Einführseite einen gemeinsamen umlaufenden Rand. Zwischen der ersten Riegelseite, der zweiten Riegelseite und der Einführseite oder im Übergang von der ersten Riegelseite zur Einführseite und/oder im Übergang von der zweiten Riegelseite zur Einführseite sind somit keinerlei Begrenzungen oder Ränder von Vorrichtungen, Einrichtungen oder Elementen der Steckeraufnahme zu finden. Diese Ausgestaltung gestattet einem Nutzer über den gesamten Löse- beziehungsweise Öffnungsvorgang die Kontrolle auf die Betätigungseinrichtungen ausüben, und über den gesamten Lösevorgang die Betätigungsfläche der mindestens einen Betätigungseinrichtung ohne Unterbrechung zu kontaktieren. Analoges gilt für ein Zusammenfügen von Stecker und Steckeraufnahme.

Des Weiteren können die erste Riegelseite und die zweite Riegelseite gegenüberliegend und/oder voneinander abgewandt angeordnet sein. Auch können die Einführseite und die Basisabschnittsseite gegenüberliegend und/oder voneinander abgewandt angeordnet sein. Ferner können die Oberseite und die Unterseite gegenüberliegend und/oder voneinander abgewandt angeordnet sein.

Zur Aufnahme des Steckers im Inneren oder in einem Innenraum der Steckeraufnahme kann der Stecker die Führungseinrichtung zum Zusammenführen von Stecker und Steckeraufnahme mit zwei freikragenden Enden und/oder die mindestens eine Federeinrichtung zum sicheren Verrasten und Halten der Position des Steckers in der Steckeraufnahme aufweisen. Die Führungseinrichtung dient dem korrekten Führen des Steckers in die Steckeraufnahme, sodass ein sicheres Verrasten und Halten des Steckers in der Steckeraufnahme gewährleistbar ist.

Außerdem kann die Führungseinrichtung zu einem Mittelpunkt des Steckers einen geringeren Abstand aufweisen als die mindestens eine Federeinrichtung. Somit kann die Führungseinrichtung im Vergleich zur Federeinrichtung weiter innen im Stecker angeordnet werden. Durch diese Anordnung kann der Platz oder Raum, den der Stecker bietet, optimal genutzt werden.

Ferner kann die mindestens eine Federeinrichtung zu einem Mittelpunkt des Steckers einen geringeren Abstand aufweisen als die mindestens eine Betätigungseinrichtung. Somit kann die Federeinrichtung im Vergleich zur Betätigungseinrichtung weiter innen im Stecker angeordnet werden. Durch diese Anordnung kann der Platz oder Raum, den der Stecker bietet, optimal genutzt werden.

Zudem kann die Führungseinrichtung und/oder die mindestens eine Federeinrichtung in einem Innenraum der Steckeraufnahme angeordnet sein, falls sich Stecker und Steckeraufnahme in einer zusammengefügten oder verbundenen Stellung befinden oder miteinander verbunden oder verrastet sind.

Auch kann in einer zusammengefügten oder verbundenen Stellung von Stecker und Steckeraufnahme die Betätigungsfläche der mindestens eine Betätigungseinrichtung außerhalb eines Innenraums der Steckeraufnahme verbleiben, sodass diese zur manuellen Betätigung durch einen Nutzer über den gesamten Lösevorgang und ohne Unterbrechung zugänglich ist. Eben dies gewährleistet ein permanentes Halten und Kontrollieren des Steckers der Steckschließe während des Öffnens und/oder Schließens der Steckschließe, was einen entscheidenden Vorteil bei der Handhabung durch einen Nutzer bietet.

Des Weiteren können die mindestens eine Betätigungseinrichtung und mindestens ein Schnapper einer lösbaren Schnappverbindung der Steckschließe in Längsrichtung des Steckers zueinander beabstandet sein. Ferner kann vorgesehen sein, dass die mindestens eine Betätigungseinrichtung näher an einem Basisabschnitt des Steckers angeordnet ist als mindestens ein Schnapper einer lösbaren Schnappverbindung der Steckschließe. In beiden Fällen können Betätigungseinrichtung und Schnapper in Längsrichtung des Steckers voneinander oder zueinander beabstandet sein. Somit kann der mindestens eine Schnapper weiter in die Steckeraufnahme als die mindestens eine Betätigungseinrichtung eingeführt werden, um ein sicheres Verschließen der Steckschließe zu ermöglichen. Auch kann durch die versetzte Anordnung ein permanentes Halten und Kontrollieren des Steckers der Steckschließe während des Öffnens der Steckschließe, aber auch während des Schließens der Steckschließe gewährleistet werden.

Zudem ist es möglich, dass in einer zusammengefügten oder verbundenen Stellung von Stecker und Steckeraufnahme die mindestens eine Betätigungseinrichtung und mindestens ein Schnapper einer lösbaren Schnappverbindung der Steckschließe zum Lösen des Steckers von der Steckeraufnahme dazu dimensioniert und/oder derart aufeinander abgestimmt sind, dass ein Spalt zwischen der mindestens einen Betätigungseinrichtung und der Steckeraufnahme wenigstens einem Lösehub der lösbaren Schnappverbindung entspricht. Dadurch ist zum einen der Formschluss zwischen Stecker und Steckeraufnahme in Längsrichtung aufhebbar. Zum anderen wird ein sicheres Eindrücken oder Betätigen der mindestens einen Betätigungseinrichtung dergestalt ermöglicht, dass die lösbare Schnappverbindung durch einen ausreichenden Lösehub sicher lösbar ist, um ein einfaches und schnelles Lösen / Öffnen der Steckschließe in einer zusammengefügten oder verbundenen Stellung von Stecker und Steckeraufnahme zu ermöglichen.

Ferner kann die Steckschließe eine lösbare Schnappverbindung zum wiederholbaren Lösen der Verbindung von Stecker und Steckeraufnahme aufweisen. Alternativ oder ergänzend können Stecker und Steckeraufnahme die lösbare Schnappverbindung bilden.

Die Führungseinrichtung kann frei von der lösbaren Schnappverbindung oder von frei von Eingriffsstrukturen zur Erzeugung einer Schnappverbindung sein. Auch kann der Stecker gesondert zur Führungseinrichtung die lösbare Schnappverbindung oder einen Teil der lösbaren Schnappverbindung, wie zum Beispiel mindestens einen Schnapper, aufweisen. Zudem kann der Stecker die Führungseinrichtung und die mindestens eine Federeinrichtung aufweisen, wobei beide gesondert oder separat ausgebildet sein können.

Des Weiteren kann die lösbare Schnappverbindung mindestens eine Raste aufweisen, die zumindest teilweise geometrisch komplementär mit mindestens einem Schnapper der lösbaren Schnappverbindung ausbildbar ist. Alternativ oder ergänzend kann die Steckeraufnahme die mindestens eine Raste aufweisen. Die mindestens eine Raste dient zum Beispiel zum Verrasten mit einem Schnapper, wodurch die lösbare Schnappverbindung Stecker und Steckeraufnahme voneinander lösen und auch wieder miteinander verbinden kann.

Außerdem kann die mindestens eine Raste von einem Basisabschnitt der Steckeraufnahme und/oder von einem Oberabschnitt der Steckeraufnahme und/oder von einem Unterabschnitt der Steckeraufnahme gebildet werden. Auch kann die mindestens eine Raste unbeweglich oder starr an einem Basisabschnitt der Steckeraufnahme und/oder an einem Oberabschnitt der Steckeraufnahme und/oder an einem Unterabschnitt der Steckeraufnahme ausgebildet sein. Somit ist eine Raste oder sind mehrere Rasten bildbar, die von mehreren Abschnitten und somit auch von mehreren Seiten auf einen Schnapper einwirken können. Dadurch ist der Halt eines Schnappers der lösbaren Schnappverbindung mit mindestens einer Raste verbesserbar.

Zudem ist es denkbar, dass die mindestens eine Raste in einem Innenraum der Steckeraufnahme ausgebildet ist und/oder dass die mindestens eine Raste an einer Innenseite eines Oberabschnitts der Steckeraufnahme und/oder an einer Innenseite eines Unterabschnitts der Steckeraufnahme ausgebildet ist. Durch diese Ausgestaltungsmöglichkeiten kann die Steckeraufnahme zum Beispiel einen Schnapper der lösbaren Schnappverbindung in ihrem Inneren oder in ihrem Innenraum festhalten, um einen sicheren Halt des Steckers in der Steckeraufnahme zu gewährleisten. Auch kann somit die mindestens eine Raste vor Beschädigungen geschützt werden.

Des Weiteren kann die mindestens eine Raste hakenförmig ausgebildet sein und/oder zum Hintergreifen von einem Schnapper der lösbaren Schnappverbindung ausgebildet sein. Ferner kann die mindestens eine Raste einen Hinterschnitt zum formschlüssigen Halten eines Schnappers der lösbaren Schnappverbindung aufweisen, wobei der Hinterschnitt einem Basisabschnitt der Steckeraufnahme zugewandt sein kann. Dies ermöglicht einen sicheren Zusammenhalt von Stecker und Steckeraufnahme in einer verbundenen Stellung. Somit kann die mindestens eine Raste vor Kräften, die im Gebrauch der Steckschließe von außen auf die Steckeraufnahme einwirken und die zu Beschädigungen führen können, geschützt werden.

Ferner ist es möglich, dass die mindestens eine Raste einen rampenförmigen Abschnitt zur Auslenkung oder zum Einfedern eines Schnappers der lösbaren Schnappverbindung aufweist. Der rampenförmige Abschnitt kann von einem Basisabschnitt der Steckeraufnahme und von einem Oberabschnitt der Steckeraufnahme und/oder von einem Basisabschnitt der Steckeraufnahme und von einem Unterabschnitt der Steckeraufnahme gebildet werden. Der rampenförmige Abschnitt erleichtert das Einfedern eines Schnappers der lösbaren Schnappverbindung, sodass dieser bei Erreichen des Endes des rampenförmigen Abschnitts einen Hinterschnitt hintergreifen kann, um den Stecker sicher an der Steckeraufnahme zu halten.

Auch kann der rampenförmige Abschnitt verrundet in einen Unterabschnitt oder in einen Oberabschnitt der Steckeraufnahme und/oder in einen Basisabschnitt der Steckeraufnahme übergehen. Dies erleichtert das Herstellen der Steckschließe mittels eines Spritzgussverfahrens.

Außerdem kann die mindestens eine Raste einen Hinterschnitt umfassen, wobei der Hinterschnitt von einem Basisabschnitt der Steckeraufnahme und von einem Oberabschnitt der Steckeraufnahme und/oder von einem Basisabschnitt der Steckeraufnahme und von einem Unterabschnitt der Steckeraufnahme gebildet werden kann. Den Hinterschnitt der mindestens einen Raste kann ein Schnapper der lösbaren Schnappverbindung hintergreifen, um den Stecker sicher an der Steckeraufnahme zu halten.

Des Weiteren kann der rampenförmige Abschnitt und/oder der Hinterschnitt in den Innenraum der Steckeraufnahme vorspringen. Auch ist es möglich, dass der rampenförmige Abschnitt vollständig in einem Innenraum der Steckeraufnahme angeordnet ist und/oder dass der rampenförmige Abschnitt von einer Außenkante eines Unterabschnitts der Steckeraufnahme versetzt in Richtung des Innenraums der Steckeraufnahme angeordnet ist. Somit kann der rampenförmige Abschnitt und/oder der Hinterschnitt vor äußeren Einflüssen geschützt und die Funktion der Steckschließe kann sicher aufrechterhalten werden.

Ferner kann die mindestens eine Raste wenigstens eine erste Raste und wenigstens eine zweite Raste aufweisen. Die erste Raste und die zweite Raste der mindestens einen Raste können übereinander und beabstandet zueinander angeordnet sein. Die erste Raste kann an einem Oberabschnitt der Steckeraufnahme angeordnet sein. Die zweite Raste kann an einem Unterabschnitt der Steckeraufnahme angeordnet sein. Somit können zwei übereinander angeordnete Rasten einen Schnapper der lösbaren Schnappverbindung halten. Auch können einwirkende Kräfte, die Stecker und Steckeraufnahme in entgegengesetzte Richtung beanspruchen, besser aufgenommen und weitergeleitet werden.

Des Weiteren kann die Steckschließe eine lösbare Schnappverbindung zum wiederholbaren Lösen der Verbindung von Stecker und Steckeraufnahme aufweisen. Auch ist es möglich, dass Stecker und Steckeraufnahme die lösbare Schnappverbindung gemeinsam und/oder jeweils abschnittsweise bilden.

Die lösbare Schnappverbindung kann mindestens einen Schnapper aufweisen, der zumindest teilweise geometrisch komplementär mit mindestens einer Raste der lösbaren Schnappverbindung ausbildbar ist. Auch kann der Stecker den mindestens einen Schnapper aufweisen. Mithilfe des mindestens einen Schnappers kann der Stecker zum Beispiel mit mindestens einer Raste der lösbaren Schnappverbindung, wobei die mindestens eine Raste an der Steckeraufnahme anordenbar ist, verrasten, sodass Stecker und Steckeraufnahme in einer verbundenen Stellung sind.

Dabei kann der mindestens eine Schnapper an einem freikragenden Ende mindestens einer Federeinrichtung des Steckers angeordnet sein. Ferner kann der mindestens eine Schnapper unbeweglich oder starr an mindestens einer Federeinrichtung des Steckers angeordnet sein. Die mindestens eine Federeinrichtung kann dem mindestens einen Schnapper ein Ein- und Ausfedern an zum Beispiel mindestens einer Raste der lösbaren Schnappverbindung gestatten oder ermöglichen.

Zudem kann der mindestens eine Schnapper für einen Innenraum der Steckeraufnahme ausgebildet sein. Außerdem kann der mindestens eine Schnapper hakenförmig ausgebildet sein. Somit ist ein Einrasten und Ausrasten an zum Beispiel mindestens einer Raste der lösbaren Schnappverbindung möglich.

Des Weiteren kann der mindestens eine Schnapper zum Hintergreifen einer Raste der lösbaren Schnappverbindung ausgebildet sein, um Stecker und Steckeraufnahme zu verbinden, insbesondere formschlüssig zu verbinden. Ferner kann der mindestens eine Schnapper mindestens einen Vorsprung zum formschlüssigen Halten oder Verrasten des Schnappers an einer Raste der lösbaren Schnappverbindung aufweisen. Der mindestens eine Vorsprung kann eine Eingriffsfläche zum Hintergreifen einer Raste der lösbaren Schnappverbindung aufweisen, die einem Basisabschnitt des Steckers zugewandt sein kann. Folglich ist ein Einrasten oder Hintergreifen des Steckers oder des mindestens einen Schnappers an zum Beispiel einer Raste der lösbaren Schnappverbindung auf einfache Weise möglich.

Ferner kann der mindestens eine Vorsprung einseitig oder beidseitig mindestens eine Federeinrichtung der Steckschließe überragen. Auch kann der mindestens eine Vorsprung in einer Höhenrichtung des Steckers und/oder entgegen der Höhenrichtung vorstehen.

Außerdem kann der mindestens eine Schnapper eine Form nach Art eines Hammerkopfs aufweisen. Auch kann der mindestens eine Schnapper eine rampenförmige Seitenfläche zum Entlanggleiten an einem rampenförmigen Abschnitt mindestens einer Raste der lösbaren Schnappverbindung aufweisen. Zudem ist es möglich, dass die rampenförmige Seitenfläche zu einem rampenförmigen Abschnitt einer Raste der lösbaren Schnappverbindung ausgerichtet ist und/oder einer ersten oder zweiten Riegelseite der Steckeraufnahme zugewandt ist. Die rampenförmige Seitenfläche vereinfacht das Einstecken des Steckers in die Steckeraufnahme. Denn die rampenförmige Seitenfläche bewegt beim Zusammenführen von Stecker und Steckeraufnahme den mindestens einen Schnapper derart, dass dieser einfedert.

Ferner kann der mindestens eine Schnapper einen ersten Schnapper und einen zweiten Schnapper aufweisen, wobei der erste Schnapper und der zweite Schnapper nebeneinander und beabstandet zueinander angeordnet sein können. Somit kann eine stabile Verbindung von Stecker und Steckeraufnahme gewährleistet werden.

Zudem ist es möglich, dass die Steckschließe mindestens eine Federeinrichtung zum sicheren Verrasten und Halten der Position des Steckers in der Steckeraufnahme aufweist, wobei die Federeinrichtung von einem Basisabschnitt des Steckers vorspringt.

Die mindestens eine Federeinrichtung kann zur Rückstellung eines Schnappers einer lösbaren Schnappverbindung der Steckschließe dienen. Auch können zwei Federeinrichtungen zueinander hin einfederbar und voneinander weg zurückfederbar ausgebildet sein. Ferner kann die mindestens eine Federeinrichtung dazu ausgebildet sein, in eine Federrichtung einzufedern und in die zur Federrichtung entgegengesetzte Richtung zurückzufedern oder auszufedern. Somit ist ein Schnapper einer lösbaren Schnappverbindung der Steckschließe hin und her bewegbar, wodurch dieser in der Steckeraufnahme zum Beispiel einrasten oder einschnappen kann und dann auch wieder gelöst werden kann.

Des Weiteren kann die mindestens eine Federeinrichtung eine Innen- und eine Außenseite sowie eine Ober- und eine Unterseite aufweisen. Ferner kann die mindestens eine Federeinrichtung dazu ausgebildet sein, dass diese in Richtung der Innenseite einfederbar ist und/oder dass die Innenseite einem Führungsfinger einer Führungseinrichtung des Steckers gegenüberliegend und/oder zugewandt angeordnet ist.

Zudem ist es denkbar, dass die mindestens eine Federeinrichtung als Kragarm ausgebildet ist und/oder dass am freikragenden Ende der mindestens einen Federeinrichtung ein Schnapper einer lösbaren Schnappverbindung angeordnet ist. Somit ist der Schnapper hin und her bewegbar beziehungsweise federbar ausgestaltet. Dabei kann der Schnapper die Abmaße der mindestens einen Federeinrichtung in Richtung der Oberseite und/oder in Richtung der Unterseite der mindestens eine Federeinrichtung überragen. Dies erleichtert und/oder verbessert den Eingriff des Schnappers an einer Raste einer lösbaren Schnappverbindung. Auch kann der Schnapper in Richtung der Außenseite der mindestens einen Federeinrichtung rampenförmig ausgebildet sein. Somit kann der Schnapper leichter von einer Raste einer lösbaren Schnappverbindung bewegt werden, um diesen hin zu einem Hinterschnitt zu führen.

Ferner kann die mindestens eine Betätigungseinrichtung oder der Stecker eine erste Betätigungseinrichtung und/oder eine zweite Betätigungseinrichtung aufweisen, mit welcher die Verbindung von Stecker und Steckeraufnahme lösbar ist.

Die mindestens eine Betätigungseinrichtung kann mithilfe mindestens einer Federeinrichtung des Steckers rückstellend ausgebildet sein. Auch kann die mindestens eine Betätigungseinrichtung mit mindestens einer Federeinrichtung des Steckers wirkverbunden und/oder einstückig ausgebildet sein. Dadurch kann eine manuelle Betätigungskraft von der mindestens einen Betätigungseinrichtung auf die mindestens eine Federeinrichtung des Steckers übertragbar sein. Auch wird mithilfe dieser Ausgestaltung die Herstellung der Steckschließe vereinfacht.

Außerdem kann die mindestens eine Betätigungseinrichtung an einer Außenseite mindestens einer Federeinrichtung des Steckers angeordnet sein. Ferner kann die mindestens eine Betätigungseinrichtung in Form einer Taste und/oder eines Druckknopfes ausgebildet sein. Somit ist die mindestens eine Betätigungseinrichtung von einem Nutzer einfach zu erreichen und zu bedienen.

Zudem können Stecker und Steckeraufnahme geometrisch komplementär ausgebildet sein. Auch kann der Stecker und/oder die Steckeraufnahme einteilig ausgebildet oder ausgestaltet sein. Die komplementäre Ausbildung gestattet ein sicheres Zusammenfügen von Stecker und Steckeraufnahme sowie einen sicheren und stabilen Halt des Steckers in der Steckeraufnahme.

Des Weiteren kann die Steckeraufnahme einen Basisabschnitt aufweisen, ausgebildet zur Befestigung an einem zweiten Verbindungspartner oder an einer Oberfläche eines Textils. Somit kann zum Beispiel ein Ende eines Gurtes oder eines Geschirrs für ein Haustier mit einer Steckeraufnahme versehen werden.

Ferner kann ein zweiter Verbindungspartner oder eine Oberfläche eines Textiles an der Steckeraufnahme oder an dem Basisabschnitt der Steckeraufnahme befestigbar sein. Auch kann der Basisabschnitt mindestens einen Schnallensteg aufweisen, an welchem ein zweiter Verbindungspartner befestigbar ist. Auf diese Weise kann zum Beispiel ein Ende eines Gurtes oder eines Geschirrs für ein Haustier mit einer Steckeraufnahme versehen werden.

Es ist aber auch möglich, die Steckeraufnahme und/oder deren Basisabschnitt frei von einem Schnallensteg auszubilden.

Außerdem kann die Steckeraufnahme einen Oberabschnitt und einen Unterabschnitt aufweisen, die jeweils von dem Basisabschnitt aus in die gleiche Richtung vorspringen. Somit ist eine konkrete konstruktive Ausgestaltung möglich.

Zudem kann die Steckeraufnahme einen Oberabschnitt aufweisen, der von dem Basisabschnitt vorspringen und/oder in Form einer Zunge ausgebildet sein kann. Der Oberabschnitt kann balkenförmig und/oder einstückig mit dem Basisabschnitt ausgebildet sein. Somit können Herstellungskosten für die Steckschließe reduziert werden.

Des Weiteren kann der Oberabschnitt eine Innen- und eine Außen- oder Oberseite aufweisen. An der Innenseite kann eine Raste einer lösbaren Schnappverbindung der Steckschließe ausgebildet sein. Somit ist die Raste geschützt vor äußeren Einflüssen ausbildbar.

Auch kann die Steckeraufnahme einen Oberabschnitt und einen Unterabschnitt aufweisen, die jeweils von dem Basisabschnitt aus in die gleiche Richtung vorspringen.

Ferner kann die Steckeraufnahme einen Unterabschnitt aufweisen, der von dem Basisabschnitt vorspringen und/oder in Form einer Zunge ausgebildet sein kann. Dabei kann der Unterabschnitt balkenförmig und/oder einstückig mit dem Basisabschnitt ausgebildet sein. Dies führt zu einer Reduzierung von Herstellungskosten für die Steckschließe.

Der Unterabschnitt kann eine Innen- und eine Außen- oder Unterseite aufweisen. An der Innenseite kann eine Raste einer lösbaren Schnappverbindung der Steckschließe ausgebildet sein. Somit ist die Raste geschützt vor äußeren Einflüssen ausbildbar.

Zudem kann die Steckeraufnahme einen Oberabschnitt und einen Unterabschnitt aufweisen, die jeweils mit dem Basisabschnitt einstückig verbunden ausgebildet und/oder zueinander beabstandet angeordnet sein können, sodass dazwischen ein Innenraum ausbildbar ist. Die Außenseiten des Ober- und des Unterabschnitts oder die Oberseite des Oberabschnitts und die Unterseite des Unterabschnitts können voneinander beabstandet sein.

Ferner kann die Steckeraufnahme einen Führungssteg aufweisen, insbesondere zur Führung des Steckers. Folglich kann beim Zusammenführen von Stecker und Steckeraufnahme der Stecker von der Steckeraufnahme geführt werden. Dabei kann der Führungssteg derart ausgebildet sein, dass dieser von einer Führungseinrichtung und/oder von mindestens einem Führungsfinger einer Führungseinrichtung führbar ist.

Zwischen einem Ober- und Unterabschnitt der Steckeraufnahme kann ein Innenraum ausgebildet sein. Der Innenraum kann abschnittsweise von einem Führungssteg der Steckeraufnahme unterteilt sein.

Der Führungssteg kann den Ober- und Unterabschnitt der Steckeraufnahme miteinander verbinden und/oder zueinander abstützen. Auch kann der Führungssteg den Oberabschnitt, den Unterabschnitt und den Basisabschnitt der Steckeraufnahme miteinander verbinden. Somit kann die Steckeraufnahme mechanisch stabil ausgebildet werden.

Der Oberabschnitt, der Unterabschnitt und die Steckeraufnahme können im Querschnitt gesehen gemeinsam nach Art eines Doppel-T-Trägers oder nach Art eines I-Profils ausgebildet sein. Diese Ausgestaltung erhöht die Stabilität gegen äußere, einwirkende Kräfte.

Des Weiteren kann der Führungssteg an einer Innenseite des Oberabschnitts und an einer Innenseite des Unterabschnitts angeordnet sein. Dabei kann der Führungssteg von dem Basisabschnitt vorspringen. Auch kann der Führungssteg stützwandförmig ausgebildet sein. Zudem kann der Führungssteg mittig, insbesondere mittig in Draufsicht auf die Steckeraufnahme, am Oberabschnitt und/oder am Unterabschnitt und/oder am Basisabschnitt angeordnet sein. Somit kann die mechanische Stabilität der Steckeraufnahme erhöht werden.

Außerdem kann jede Seite der Steckschließe oder der Steckeraufnahme von einer Freiformfläche gebildet sein. Die Einführseite der Steckeraufnahme kann dabei wenigstens zwei gegenüberliegende Kanten aufweisen, die unterschiedlich geformt sind.

So kann die Einführseite der Steckeraufnahme eine Oberkante, die konvex ausgebildet sein kann, und eine Unterkante aufweisen, die geradflächig oder eben ausgebildet sein kann. Die Oberkante kann von Oberseite und Einführseite der Steckeraufnahme konvex ausgebildet sein. Auch kann die Unterkante von Unterseite und Einführseite der Steckeraufnahme geradlinig oder eben ausgebildet sein. Vorgenannte Ausgestaltungen dienen der einfachen und verbesserten Handhabung der Steckschließe durch einen Nutzer.

Des Weiteren kann eine erste und/oder zweite Riegelseite der Steckeraufnahme wenigstens zwei gegenüberliegende Kanten aufweisen, die unterschiedlich geformt sein können. Jede Riegelseite kann eine Oberkante, die S-förmig ausgebildet sein kann, und eine Unterkante aufweisen, die L-förmig ausgebildet sein kann. Vorgenannte Ausgestaltungen dienen der einfachen und verbesserten Handhabung der Steckschließe durch einen Nutzer.

Außerdem kann eine gemeinsame Kante von Oberseite und Riegelseite der Steckeraufnahme S-förmig ausgebildet sein. Ferner kann eine gemeinsame Kante von Oberseite und Riegelseite der Steckeraufnahme in die gemeinsame Kante von Oberseite und Einführseite übergehen.

Zudem kann eine gemeinsame Kante von Unterseite und Riegelseite der Steckeraufnahme L-förmig ausgebildet sein. Ferner kann eine gemeinsame Kante von Unterseite und Riegelseite der Steckeraufnahme einen Stoß bilden, der winklig oder rechtwinklig ausgebildet sein kann.

Des Weiteren kann eine Basisabschnittsseite der Steckeraufnahme von einem Basisabschnitt der Steckeraufnahme gebildet werden. Zudem kann eine Basisabschnittsseite gekrümmt und/oder konvex ausgebildet sein. Die Basisabschnittsseite kann zumindest abschnittsweise zylindermantelflächenförmig geformt sein. Vorgenannte Ausgestaltungen dienen der einfachen und verbesserten Handhabung der Steckschließe durch einen Nutzer.

Außerdem ist es möglich, dass die Oberseite der Steckeraufnahme gekrümmt und/oder konvex ausgebildet ist, wobei die Oberseite mit der Basisabschnittsseite verrundet sein kann.

Die Unterseite der Steckeraufnahme kann eben ausgebildet sein. Ferner kann die Unterseite und die Basisabschnittsseite einen Stoß bilden, der winklig oder rechtwinklig ausgebildet sein kann.

Die oben beschriebenen Ausgestaltungen betreffend die Form der Steckschließe ermöglichen eine verbesserte und angenehme Handhabung für einen Nutzer.

Auch kann eine Oberseite und/oder ein Oberabschnitt der Steckeraufnahme eine kleinere Fläche beziehungsweise Oberfläche aufweisen als die Unterseite und/oder ein Unterabschnitt. Zudem kann die Unterseite und/oder ein Unterabschnitt der Steckeraufnahme eine Flächenerstreckung aufweisen, die mindestens 10% oder mindestens 20% oder mindestens 30% oder mindestens 40% oder mindestens 50% größer ist als die Flächenerstreckung der Oberseite und/oder ein Oberabschnitt der Steckeraufnahme.

Diese Ausgestaltung erlaubt eine formstabile und auch mechanisch stabile Steckeraufnahme bei gleichzeitigem minimalen Materialeinsatz. Insbesondere kann eine größer dimensionierte Unterseite oder ein größer dimensionierter Unterabschnitt - in Relation zum Oberabschnitt - eine verbesserte Befestigung des Unterabschnitts auf einem Textil gewährleisten. Zudem kann die Außenkontur des Unterabschnitts vorteilhaft auf die Außenkontur des jeweiligen Textilabschnitts angepasst sein, ohne dass die Funktionalität der Steckeraufnahme beeinträchtigt wird.

Des Weiteren kann eine oder die Unterseite und/oder der Unterabschnitt der Steckeraufnahme auf einem Textil befestigt und/oder von einer Schale und/oder einer Platte, insbesondere aus Kunststoff, gebildet werden. Auch kann an der Unterseite und/oder dem Unterabschnitt der Steckeraufnahme ein Textil und/oder eine Schale und/oder eine Platte, insbesondere aus Kunststoff, angeordnet und/oder befestigt sein. Somit kann die Auflagefläche der Steckeraufnahme vergrößert werden. Auch erlaubt diese Ausbildung das einfachere Verbinden der Steckeraufnahme mit zum Beispiel einem Textil für ein Geschirr eines Haustieres.

Bevorzugt weist die Platte oder Schale an der Unterseite der Steckeraufnahme eine größere Flächenerstreckung auf, als eine Oberseite und/oder ein Oberabschnitt der Steckeraufnahme. Ferner kann die Platte und/oder die Schale in Breitenrichtung die mindestens eine Betätigungseinrichtung überragen.

Aufgrund der verhältnismäßig großen und außerhalb des Innenraums der Steckeraufnahme angeordneten Betätigungsflächen können diese trotz eines seitlichen Überstandes der Platte gut und bequem betätigt werden.

Zudem kann der Stecker einen Basisabschnitt, ausgebildet zur Befestigung an einem ersten Verbindungspartner, aufweisen. Der Basisabschnitt kann mindestens einen Schnallensteg aufweisen, an welchem ein erster Verbindungspartner befestigbar ist. Auch kann der Stecker einen Basisabschnitt, ausgebildet zur Befestigung an einem ersten Verbindungspartner, aufweisen.

Es ist aber auch möglich, den Stecker und/oder dessen Basisabschnitt frei von mindestens einem Schnallensteg auszubilden.

Der Stecker kann von mehreren Seiten oder Seitenflächen eingegrenzt oder begrenzt werden. Des Weiteren kann der Stecker drei aneinander angrenzende Seiten oder Seitenflächen umfassen, die gemeinsam einen Zugang hin zu einem Mittelpunkt des Steckers bilden. Von den drei aneinander angrenzenden Seiten können zwei gegenüberliegend angeordnet sein und die weitere Seite die beiden gegenüberliegenden Seiten miteinander verbinden. Dadurch kann das Innere des Steckers von drei Seiten in eine Steckeraufnahme der Steckschließe einbringbar sein.

Ferner kann der Stecker eine erste Betätigungsseite, eine zweite Betätigungsseite, eine Einsteckseite, eine Oberseite, eine Unterseite und eine Basisabschnittsseite aufweisen. Die erste Betätigungsseite, die zweite Betätigungsseite und die Einsteckseite können aneinander angrenzen und gemeinsam einen Zugang in das Innere des Steckers bilden.

Die erste Betätigungsseite und die zweite Betätigungsseite können gegenüberliegend und zueinander abgewandt angeordnet sein. Zudem können die Einsteckseite und die Basisabschnittsseite gegenüberliegend und zueinander abgewandt angeordnet sein. Auch können die Oberseite und die Unterseite gegenüberliegend angeordnet sein.

Jede Seite oder zumindest eine Seite des Steckers kann von einer Freiformfläche gebildet sein/werden. Die erste und/oder zweite Betätigungsseite kann konvex ausgebildet sein. Vorgenannte Ausgestaltungen dienen der einfachen und verbesserten Handhabung der Steckschließe durch einen Nutzer.

Des Weiteren kann die erste und/oder zweite Betätigungsseite von der mindestens einen Betätigungsfläche gebildet werden. Die Basisabschnittsseite kann von einem Basisabschnitt des Steckers gebildet werden. Auch kann die Basisabschnittsseite gekrümmt und/oder konvex ausgebildet sein. Vorgenannte Ausgestaltungen dienen der einfachen und verbesserten Handhabung der Steckschließe durch einen Nutzer.

Ein zweiter Aspekt der vorliegenden Erfindung betrifft eine Steckeraufnahme für eine Steckschließe. Eine Steckeraufnahme gemäß dem zweiten Aspekt kann für eine Steckschließe, insbesondere nach dem ersten Aspekt, ausgebildet sein. Eine Steckeraufnahme gemäß dem zweiten Aspekt weist drei aneinander angrenzende Seiten oder Seitenflächen auf, die gemeinsam eine einzige Öffnung zum Einführen eines Steckers einer Steckschließe in einen Innenraum der Steckeraufnahme bilden. Die Öffnung ist dabei ununterbrochen und/oder an den drei aneinander angrenzenden Seiten umlaufend und/oder durchgehend offen ausgebildet. Somit bilden die drei aneinander angrenzende Seiten eine einzige zusammenhängende Öffnung für die Aufnahme des Steckers im Inneren oder im Innenraum der Steckeraufnahme. Ferner kann über den gesamten Lösevorgang eines Steckers von der Steckeraufnahme ein Nutzer die Kontrolle auf den Stecker ausüben, und diesen über den gesamten Lösevorgang kontaktieren. Folglich ist ein permanentes Halten und Kontrollieren eines Steckers der Steckschließe während des Öffnens der Steckschließe gewährleistbar, was einen entscheidenden Vorteil bei der Handhabung bietet.

Des Weiteren kann die Steckeraufnahme für eine Steckschließe einen Oberabschnitt und Unterabschnitt sowie einen Führungssteg zur Führung eines Steckers einer Steckschließe aufweisen, wobei der Führungssteg den Oberabschnitt und den Unterabschnitt miteinander verbinden kann. Somit kann eine Führung eines Steckers beim Einführen in die Steckeraufnahme realisiert werden. Auch kann die Steckeraufnahme mechanisch stabil ausgebildet werden.

Die Merkmale der Steckschließe, wie sie unter dem ersten Aspekt erwähnt werden, können einzeln oder miteinander kombinierbar bei der Steckeraufnahme nach dem zweiten Aspekt Anwendung finden.

Ein dritter Aspekt der vorliegenden Erfindung betrifft einen Stecker für eine Steckschließe. Ein Stecker gemäß dem dritten Aspekt kann für eine Steckschließe, insbesondere nach dem ersten Aspekt, und/oder für eine Steckeraufnahme, insbesondere nach dem zweiten Aspekt, ausgebildet sein. Ein Stecker gemäß dem dritten Aspekt weist eine Führungseinrichtung zum Zusammenführen von Stecker und einer Steckeraufnahme beziehungsweise zur Führung einer Steckeraufnahme einer Steckschließe auf, wobei die Führungseinrichtung zwei freikragende Enden aufweist. Die Führungseinrichtung dient dem korrekten Führen des Steckers in eine Steckeraufnahme einer Steckschließe, sodass ein sicheres Verrasten und Halten des Steckers in einer Steckeraufnahme einer Steckschließe gewährleistbar ist.

Des Weiteren kann die Führungseinrichtung zu einem Mittelpunkt des Steckers einen geringeren Abstand aufweisen als mindestens eine Federeinrichtung zum sicheren Verrasten und Halten der Position des Steckers in einer Steckeraufnahme. Auch kann die mindestens eine Federeinrichtung zum sicheren Verrasten und Halten der Position des Steckers zu einem Mittelpunkt des Steckers einen geringeren Abstand aufweisen als mindestens eine Betätigungseinrichtung zum Lösen einer Verbindung des Steckers und einer Steckeraufnahme. Durch diese Anordnung kann der Platz, den der Stecker bietet, optimal genutzt werden.

Die Merkmale der Steckschließe, wie sie unter dem ersten Aspekt erwähnt werden, und/oder die Merkmale der Steckeraufnahme, wie sie unter dem zweiten Aspekt erwähnt werden, können einzeln oder miteinander kombinierbar bei dem Stecker gemäß dem dritten Aspekt Anwendung finden können.

Ein vierter Aspekt der vorliegenden Erfindung betrifft wiederum eine Steckschließe oder eine Schnalle, insbesondere zum lösbaren Verbinden zweier Verbindungspartner oder zweier Textile oder zweier Textilabschnitte. Bei den Verbindungspartner kann es sich beispielsweise auch um zwei gesonderte Textilien oder um zwei Abschnitte derselben Textilie handeln.

Die Steckschließe gemäß dem vierten Aspekt weist einen Stecker, an welchem ein erster Verbindungspartner befestigbar ist, und eine Steckeraufnahme auf, an welcher ein zweiter Verbindungspartner befestigbar ist. Der Stecker ist zur lösbaren Verbindung in die Steckeraufnahme einsteckbar, wobei der Stecker eine Führungseinrichtung zum Zusammenführen von Stecker und Steckeraufnahme aufweist. Ferner weist der Stecker mindestens eine Federeinrichtung zum sicheren Verrasten und Halten der Position des Steckers in der Steckeraufnahme auf.

Dabei kann die mindestens eine Federeinrichtung frei von geometrischen Restriktionen, insbesondere frei von geometrischen Restriktionen durch die Führungseinrichtung, in Richtung der Führungseinrichtung einfedern und in die entgegengesetzte Richtung zurückfedern.

Somit können sich die mindestens eine Federeinrichtung und die Führungseinrichtung relativ zueinander bewegen, wobei sie sich nicht berühren oder in ihrer Bewegung behindern. Die mindestens eine Federeinrichtung und der Führungsfinger der Führungseinrichtung können einander zugewandt gegenüberliegend angeordnet sein.

Die Merkmale der Steckschließe, wie sie unter dem ersten Aspekt erwähnt werden, und/oder die Merkmale des Steckers und/oder der Steckeraufnahme, wie sie unter dem zweiten und dritten Aspekt erwähnt werden, können einzeln oder miteinander kombinierbar bei der Steckschließe nach dem vierten Aspekt Anwendung finden können.

Ein fünfter Aspekt der vorliegenden Erfindung betrifft eine Steckschließe oder eine Schnalle, insbesondere zum lösbaren Verbinden zweier Verbindungspartner oder zweier Textile oder zweier Textilabschnitte. Bei den Verbindungspartner kann es sich beispielsweise auch um zwei gesonderte Textilien oder um zwei Abschnitte derselben Textilie handeln.

Die Steckschließe weist einen Stecker, an welchem ein erster Verbindungspartner befestigbar ist, und eine Steckeraufnahme auf, an welcher ein zweiter Verbindungspartner befestigbar ist. Der Stecker ist zur lösbaren Verbindung in die Steckeraufnahme einsteckbar.

Ferner weist der Stecker mindestens eine Betätigungseinrichtung zum Lösen der Verbindung von Stecker und Steckeraufnahme auf. Die mindestens eine Betätigungseinrichtung weist eine Betätigungsfläche zur manuellen Betätigung durch einen Nutzer auf.

Die Betätigungsfläche bleibt während einer Relativbewegung von Stecker und Steckeraufnahme ausgehend von einer verbundenen Stellung bis in eine vollständig getrennte Stellung von Stecker und Steckeraufnahme permanent oder während des kompletten Lösevorgangs durch einen Nutzer kontaktierbar. Somit kann über den gesamten Löse- beziehungsweise Öffnungsvorgang ein Nutzer die Kontrolle auf die Betätigungseinrichtungen ausüben und über den gesamten Lösevorgang die Betätigungsfläche ohne Unterbrechung kontaktieren.

Folglich ist der Stecker während des Lösevorgangs der Steckschließe in der Hand eines Nutzers haltbar. Somit ist ein permanentes Halten und Kontrollieren des Steckers der Steckschließe während des Öffnens der Steckschließe gewährleistet, was einen entscheidenden Vorteil bei der Handhabung bietet. Zudem bedarf es weder des Einsatzes zweier Hände eines Nutzers noch eines Umgreifens einer Hand. Vielmehr ist die erfindungsgemäße Steckschließe mit einer Hand eines Nutzers öffenbar, ohne dass der Stecker losgelassen werden muss, um den Löse- beziehungsweise Öffnungsvorgang oder gar einen Schließvorgang zu vollenden.

Des Weiteren kann aufgrund dieser Ausgestaltung die mindestens eine Betätigungseinrichtung im Vergleich zum Stand der Technik größer und/oder großflächiger ausgebildet sein, da beim Einführen des Steckers in die Steckeraufnahme oder beim Ausführen des Steckers aus der Steckeraufnahme ein permanentes Kontaktieren der Betätigungsflächen möglich ist. Dadurch verbleiben die Betätigungsflächen und/oder die mindestens eine Betätigungseinrichtung außerhalb der Steckeraufnahme. Dies gilt sowohl für eine verbundene Stellung als auch für eine vollständig getrennte Stellung.

Die Merkmale der Steckschließe, wie sie unter dem ersten Aspekt oder vierten erwähnt werden, und/oder die Merkmale des Steckers und/oder der Steckeraufnahme, wie sie unter dem zweiten und dritten Aspekt erwähnt werden, können einzeln oder miteinander kombinierbar bei der Steckschließe nach dem fünften Aspekt Anwendung finden können.

Ein sechster Aspekt der vorliegenden Erfindung betrifft ein Geschirr für ein Haustier. Ein Geschirr für ein Haustier weist mindestens eine Steckschließe, insbesondere gemäß der voranstehenden Beschreibung, und mindestens ein in Form auf ein Haustier angepasstes Textil oder Ledermaterial auf, das derart geformt ist, dass dieses ein vorderes Ende mit einem Kopfdurchlass für ein Haustier und ein hinteres Ende zum Umschließen einer Brust- und/oder Bauchpartie eines Haustiers aufweist.

Dabei kann das vordere Ende beziehungsweise der Kopfdurchlass kreisringförmig ausgestaltet sein. Gleiches kann für das hintere Ende gelten, allerdings nur in einer verbundenen Stellung von Stecker und Steckeraufnahme der mindestens einen Steckschließe.

Zwischen dem vorderen Ende und dem hinteren Ende kann ein erster Verbindungsabschnitt mit einem Haltegriff angeordnet sein. Der Haltegriff kann zum Halten oder auch als Hebehilfe genutzt werden.

Dabei kann der erste Verbindungsabschnitt die beiden Enden verbinden. Gleiches kann für einen zweiten Verbindungsabschnitt, der zum Beispiel in Draufsicht hinter dem ersten angeordnet sein kann, gelten.

Des Weiteren kann am hinteren Ende die mindestens eine Steckschließe angeordnet sein. Während ein Stecker der mindestens einen Steckschließe an einem ersten Verbindungspartner befestigt sein kann, kann eine Steckeraufnahme der mindestens einen Steckschließe an einem zweiten Verbindungspartner befestigt sein.

Bei dem ersten Verbindungspartner kann es sich um ein Riemenende eines Riemens handeln. Bei dem zweiten Verbindungspartner kann es sich um einen Textilabschnitt des Geschirrs und/oder um eine Platte handeln, die an dem Textil des Geschirrs befestigt ist.

Die Platte kann auf dem Textil, das das zweite Ende bildet, befestigt sein. Ferner kann die Steckeraufnahme an der Platte, die aus Kunststoff hergestellt sein kann, angeordnet sein. Beide können auch miteinander einstückig ausgebildet sein. Die Platte kann einen Unterabschnitt und/oder eine Unterseite der Steckeraufnahme bilden. Der Riemen kann durch eine Tasche geführt werden, die von dem Textil des Geschirrs gebildet sein kann.

Ferner kann die Außenkontur der Platte an den Verlauf des Textils angepasst sein. Anders ausgedrückt, können die Platte und zumindest abschnittsweise das Textil geometrisch aufeinander abgestimmt sein.

Weiter bevorzugt kann die Platte zusammen mit dem Textil von einem Einfassband geschützt werden, um ein Ausfasern des Textils an Schnittkanten zu verhindern. Dabei kann das Einfassband zusammen mit der Platte und/oder dem Textil des Geschirrs vernäht sein, insbesondere innenseitig direkt mit dem Textil vernäht sein. Auf diese Weise kann die Anzahl von Nähten reduziert werden, da außenseitig die Naht des Einfassbandes zur Befestigung der Platte mitgenutzt werden kann. Somit kann der Herstellungsaufwand reduziert werden. Gleichzeitig wird hierdurch eine besonders widerstandsfähige Bauweise und eine besonders sichere Befestigung der Platte auf dem jeweiligen Textil und/oder Ledermaterial des Geschirrs sichergestellt.

Die Merkmale der Steckschließe gemäß dem ersten und/oder vierten und/oder fünften Aspekt und/oder die Merkmale der Steckeraufnahme gemäß dem zweiten Aspekt und/oder die Merkmale des Steckers gemäß dem dritten Aspekt können einzeln oder miteinander kombinierbar bei dem Geschirr gemäß dem sechsten Aspekt Anwendung finden.

Ein siebter Aspekt der vorliegenden Erfindung betrifft ebenfalls ein Geschirr für ein Haustier. Ein solches Geschirr für ein Haustier weist mindestens eine Steckschließe, insbesondere gemäß der voranstehenden Beschreibung, und mindestens ein in Form auf ein Haustier angepasstes Textil oder Ledermaterial auf, das derart geformt ist, dass dieses ein vorderes Ende mit einem Kopfdurchlass für ein Haustier und ein hinteres Ende zum Umschließen einer Brust- und/oder Bauchpartie eines Haustiers aufweist.

Eine Steckeraufnahme und/oder ein Stecker der Steckschließe können dabei an einer Platte angeordnet und/oder einstückig mit einer Platte ausgebildet sein. Die Platte kann insbesondere eine Unterseite und/oder einen Unterabschnitt der Steckeraufnahme oder des Steckers bilden. Die Außenkontur der Platte kann zumindest abschnittsweise mit dem Verlauf der Außenkontur des Textils und/oder des Ledermaterials korrespondieren.

Zusätzlich oder alternativ kann die Außenkontur der Platte zumindest abschnittsweise an den Verlauf der Außenkontur des Textils und/oder des Ledermaterials angepasst sein und/oder einen zumindest abschnittsweise mit dem Textil und/oder dem Ledermaterial gleichlaufenden Konturabschnitt aufweisen.

Durch eine derartige Ausgestaltung ergibt sich eine insgesamt robuste und gleichzeitig handhabungsfreundliche Bauweise des Geschirrs. Zudem gewährleistet eine solche Ausgestaltung eine günstige Kraftübertragung und eine großflächige Abstützung der Platte über das Textil und/oder Ledermaterial auf das jeweilige Haustier.

Schließlich führt ein derart korrespondierender oder gleichlaufender Konturabschnitt von Platte und Textil und/oder Ledermaterial zu einer besonders ästhetischen Erscheinungsform.

Die Merkmale der Steckschließe gemäß dem ersten und/oder vierten und/oder fünften und/oder sechsten Aspekt und/oder die Merkmale der Steckeraufnahme gemäß dem zweiten Aspekt und/oder die Merkmale des Steckers gemäß dem dritten Aspekt können einzeln oder miteinander kombinierbar bei dem Geschirr gemäß dem siebten Aspekt Anwendung finden.

Ein achter Aspekt der vorliegenden Erfindung betrifft ein Halsband für ein Haustier. Ein Halsband für ein Haustier weist mindestens eine voranstehend beschriebene Steckschließe und mindestens ein in Form auf ein Haustier angepasstes Textil oder Ledermaterial mit einen Kopfdurchlass für ein Haustier auf. Bei dem Haustier kann es sich um einen Hund handeln.

Die Merkmale der Steckschließe gemäß dem ersten und/oder vierten und/oder fünften Aspekt und/oder die Merkmale der Steckeraufnahme gemäß dem zweiten Aspekt und/oder die Merkmale des Steckers gemäß dem dritten Aspekt können einzeln oder miteinander kombinierbar bei dem Halsband Anwendung finden.

Nachstehend wird die Erfindung anhand von Ausführungsbeispielen in Verbindung mit zugehörigen Zeichnungen näher erläutert.

Es zeigen schematisch:
- Fig. 1: eine Draufsicht auf eine Steckschließe gemäß einem Ausführungsbeispiel der vorliegenden Erfindung;
- Fig. 2: eine Unteransicht auf die Steckschließe aus Figur 1;
- Fig. 3: eine Unteransicht auf die Steckschließe aus Figur 1, mit anderen oder zusätzlichen Bezugszeichen als in Figur 2;
- Fig. 4: eine Seitenansicht auf die Steckschließe aus Figur 1;
- Fig. 5: eine räumliche Darstellung der Steckschließe aus Figur 1 von oben beziehungsweise auf eine Oberseite;
- Fig. 6: eine räumliche Darstellung der Steckschließe aus Figur 1 von oben beziehungsweise auf eine Oberseite, mit anderen oder zusätzlichen Bezugszeichen als in Figur 5;
- Fig. 7: eine räumliche Darstellung der Steckschließe aus Figur 1 von unten beziehungsweise auf eine Unterseite;
- Fig. 8: eine räumliche Darstellung eines Geschirrs für ein Haustier mit zwei Steckschließen gemäß den Figuren 1 bis 7; und
- Fig. 9: eine räumliche Darstellung einer Steckschließe aus Figur 8 in einer geschlossenen Stellung.

In der nachfolgenden Beschreibung werden gleiche Bezugszeichen für gleiche Gegenstände verwendet.

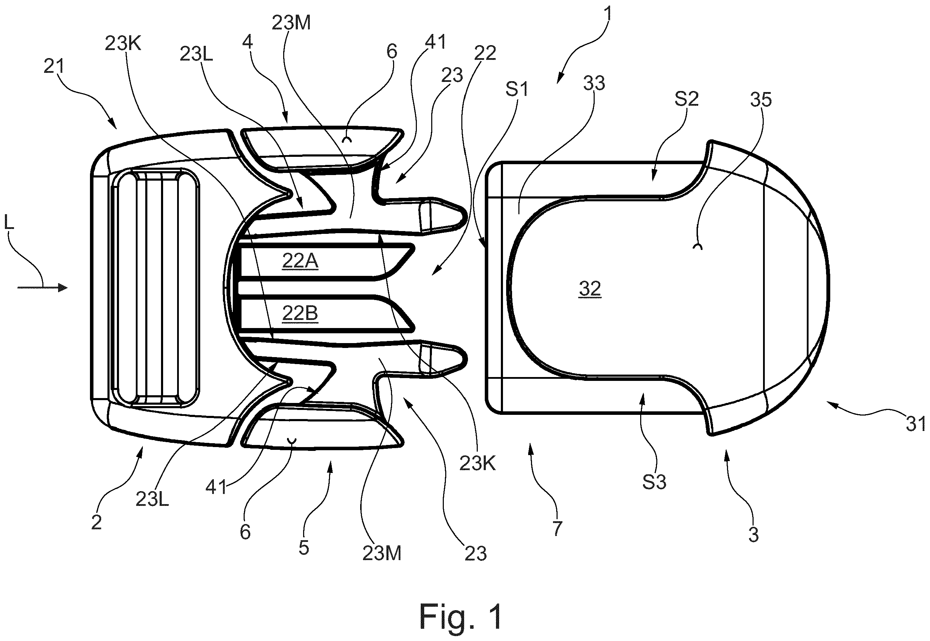

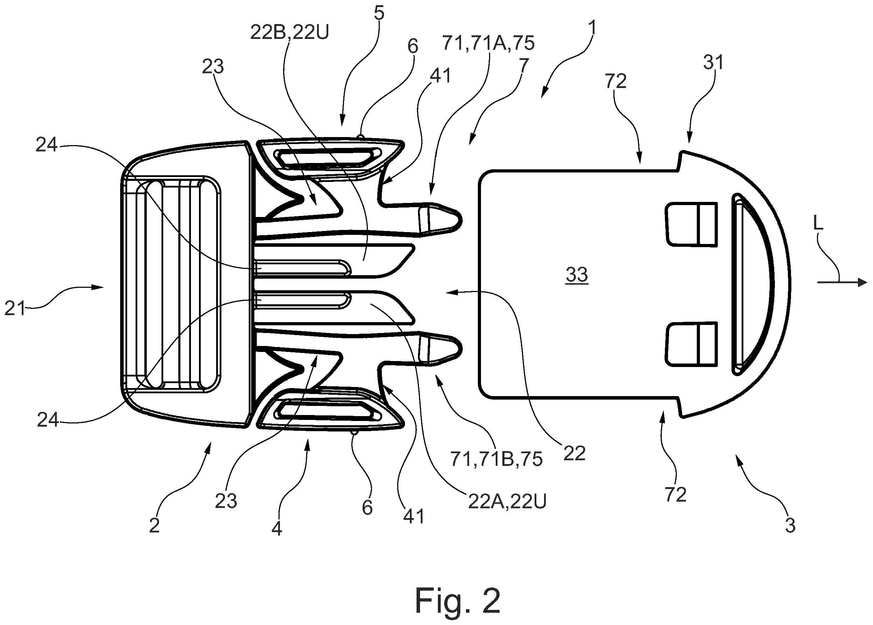

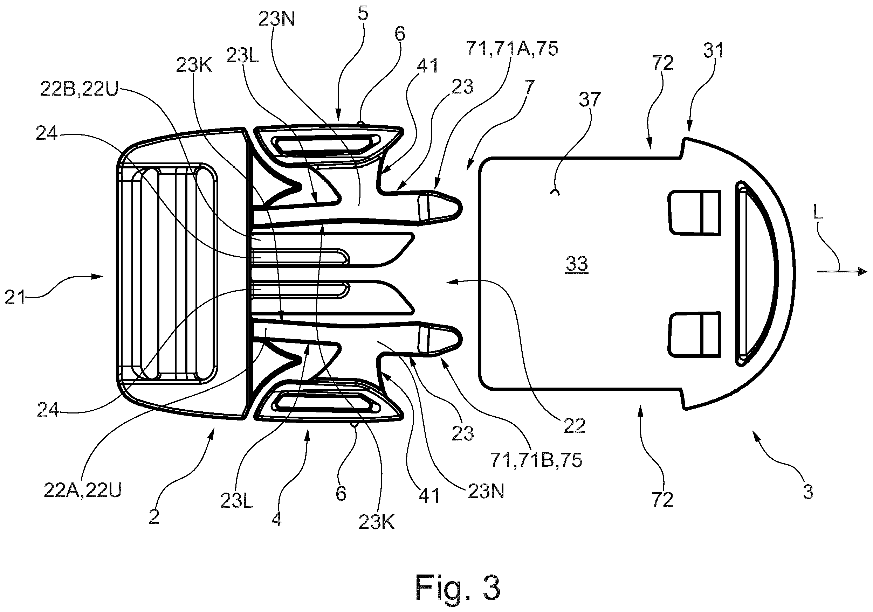

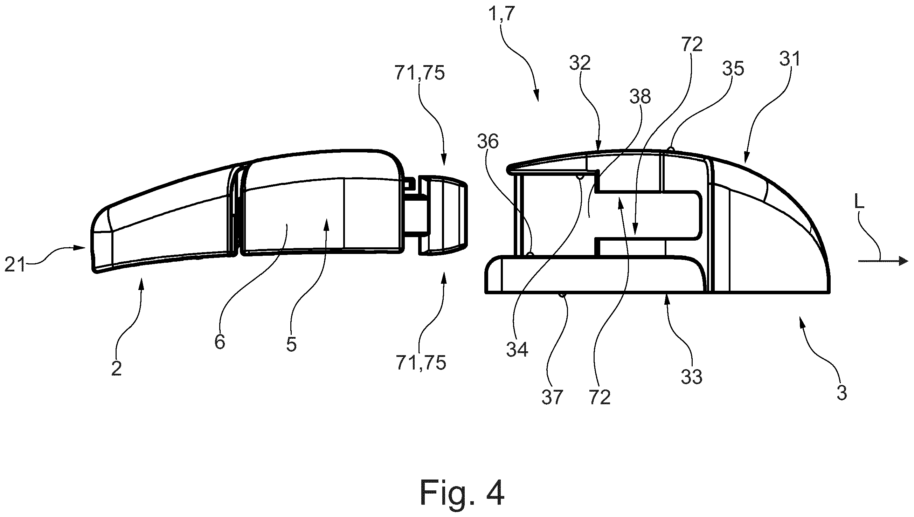

Figur 1 zeigt eine Draufsicht auf eine Steckschließe 1, Figuren 2 und 3 jeweils eine Unteransicht auf die Steckschließe 1 aus Figur 1 mit unterschiedlichen Bezugszeichen und Figur 4 eine Seitenansicht auf die Steckschließe 1 aus Figur 1.

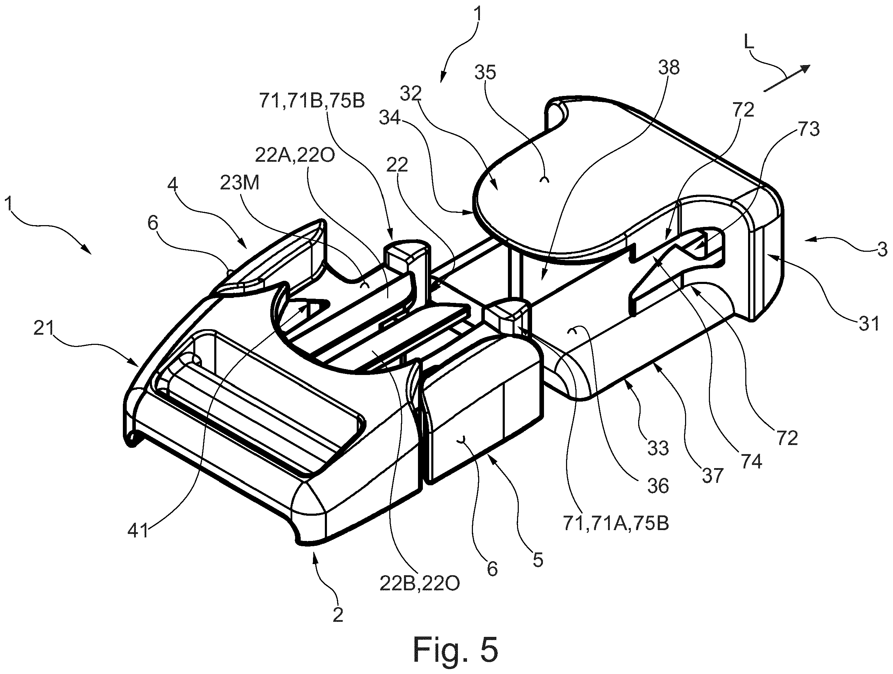

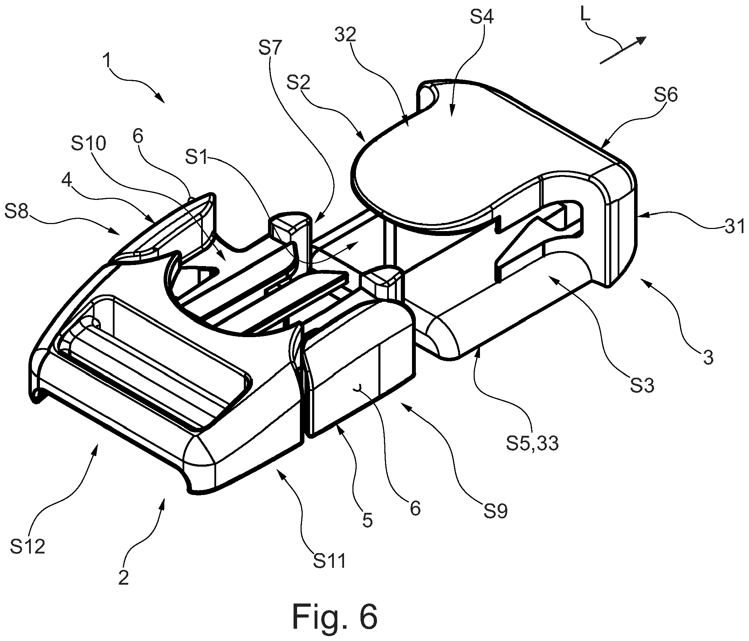

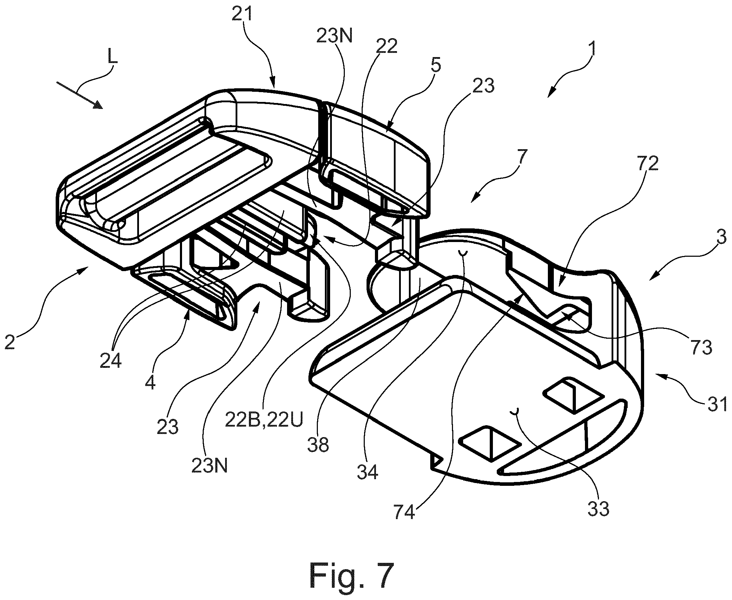

In Figuren 5 und 6 ist jeweils die gleiche räumliche Darstellung der Steckschließe 1 aus Figur 1 von oben, jedoch mit unterschiedlichen Bezugszeichen, dargestellt. Demgegenüber zeigt Figur 7 eine räumliche Darstellung der Steckschließe 1 aus Figur 1 von unten. Der Einfachheit halber werden nachstehend die vorgenannten Figuren 1 bis 7 gemeinsam beschrieben.

So zeigen die Figuren 1 bis 7 eine Steckschließe 1 zum lösbaren Verbinden zweier Verbindungspartner X, Y. Bei den Verbindungspartnern X, Y kann es sich beispielsweise um zwei gesonderte Textilien oder um zwei Abschnitte derselben Textilie handeln. Beispielsweise kann es sich bei den Verbindungspartnern X, Y um einen Riemen oder Spanngurt einerseits sowie um einen Abschnitt eines Geschirrs, insbesondere eines Hundegeschirrs, andererseits handeln.

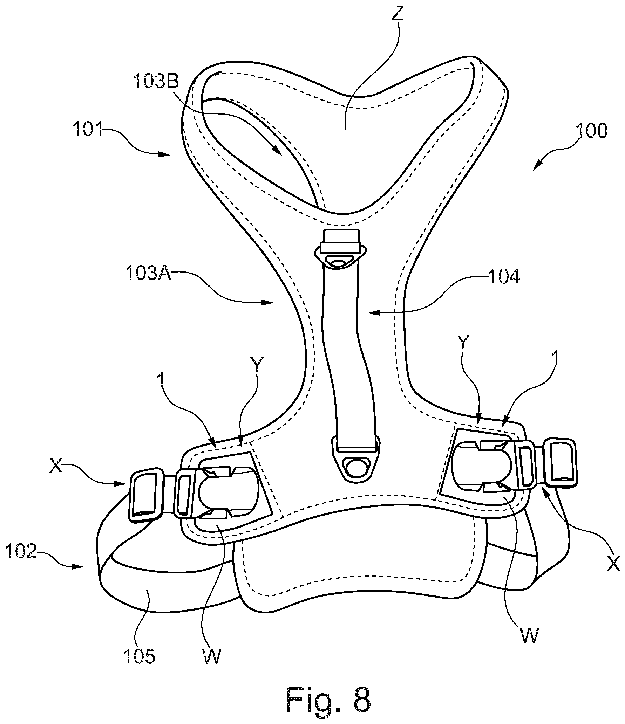

Die Steckschließe 1 weist einen Stecker 2 auf, an welchem ein erster Verbindungspartner X befestigbar ist. Ferner umfasst die Steckschließe 1 eine Steckeraufnahme 3, an welcher ein zweiter Verbindungspartner Y befestigbar ist beziehungsweise die mit einem zweiten Verbindungspartner Y fest verbunden sein kann. Beispielsweise kann die Steckeraufnahme 3 fest auf einem Abschnitt einer Textilie, insbesondere eines Geschirrs für Haustiere, festgenäht sein, wie noch näher in Bezug auf Figur 8 beschrieben wird..

Dabei ist der Stecker 2 zur lösbaren Verbindung in die Steckeraufnahme 3 einsteckbar, wobei der Stecker 2 eine Führungseinrichtung 22 zum Zusammenführen von Stecker 2 und Steckeraufnahme 3 aufweist.

Ferner weist der Stecker 2 zwei Federeinrichtungen 23 zum sicheren Verrasten und Halten der Position des Steckers 2 in der Steckeraufnahme 3 auf. Die Führungseinrichtung 22 ist in einer Höhenrichtung versetzt zu den Federeinrichtungen 23 angeordnet.

Durch eine derartige Ausgestaltung können geometrische Restriktionen zwischen der jeweiligen Federeinrichtung 23 und der Führungseinrichtung 22 verringert oder vollständig vermieden werden. Eine Federweg beziehungsweise Lösehub der Federeinrichtung 23 wird durch eine erfindungsgemäße Ausgestaltung nicht oder in verringertem Umfang durch die Anordnung der Führungseinrichtung 22 beeinträchtigt. Aufgrund dieses Umstandes kann die Führungseinrichtung 22 verhältnismäßig lang beziehungsweise langgestreckt oder weit vorragend in Richtung des der Steckeraufnahme 3 zugewandten Endes des Steckers 2 ausgebildet werden. Eine entsprechend dimensionierte Führungseinrichtung 22 erleichtert das Einfädeln mit korrespondierend geformten Abschnitten der Steckeraufnahme 3. Eine Fehlbedienung, beispielsweise durch versehentliches Einführen eines Führungsstegs 38 der Steckeraufnahme 3 - nachfolgend näher beschrieben - in einen Bereich zwischen der Führungseinrichtung 22 und einer Federeinrichtung 23 des Steckers 2, lässt sich auf diese Weise sicher vermeiden.

Ferner kann durch eine erfindungsgemäße Ausgestaltung ein Federweg, der die Federeinrichtungen 23 beim Einfedern und/oder beim Zusammenführen von Stecker 2 und Steckeraufnahme 3 in Richtung einer Mitte des Steckers 2 und in Richtung der Führungseinrichtung 22 führt, vergrößert werden. Der Federweg kann sich in eine Breitenrichtung des Steckers 2 erstrecken. Somit kann die Haltekraft des Steckers 2 an der Steckeraufnahme 3 verbessert beziehungsweise erhöht werden. Zusätzlich kann das Lösen von Stecker 2 und Steckeraufnahme 3 einfacher von einem Nutzer gehandhabt werden. Denn ein Lösehub, um welchen der Stecker 2 in einen Zustand bringbar ist, in welchen dieser von der Steckeraufnahme 3 lösbar ist, ist nun derart ausreichend dimensioniert, dass die Handhabung für einen Nutzer vereinfacht wird.

Die Steckschließe 1 und der Stecker 2 und die Steckeraufnahme 3 können jeweils eine Breite oder Dicke, eine Höhe und eine Länge aufweisen. Hierbei kann sich die Breite in Breitenrichtung, die Höhe in Höhenrichtung und/oder die Länge in Längsrichtung erstrecken. Breite, Höhe und Länge sind rechtwinklig zueinander orientiert, ähnlich einem dreidimensionalen Koordinatensystem.

Um beispielsweise den Stecker 2 in die Steckeraufnahme 3 einzuführen muss der Stecker 1 in Einsteckrichtung beziehungsweise entlang seiner Längsrichtung L in die Steckeraufnahme eingesteckt werden. Dabei erstrecken sich die Führungseinrichtung 22 und die Federeinrichtungen 23 in Längsrichtung L.

Die Höhe kann sich, insbesondere senkrecht, von der Führungseinrichtung 22 oder von einem Führungsfinger 22A, 22B der Führungseinrichtung 22 erstrecken. Die Länge kann sich in Längsrichtung L erstrecken und/oder von einem Basisabschnitt 21 des Steckers 2 hin zur Führungseinrichtung 22 oder zu einem freikragenden Ende eines Führungsfingers 22A, 22B der Führungseinrichtung 22 erstrecken. Die Breite kann sich quer zur Länge oder Längsrichtung L und zur Höhe der Führungseinrichtung 22 erstrecken.

Auch kann sich die Höhe, insbesondere senkrecht, von einer Federeinrichtung 23 erstrecken. Die Länge kann sich in Längsrichtung L erstrecken und/oder von einem Basisabschnitt 21 des Steckers 2 hin zu einer Federeinrichtung 23 erstrecken. Die Breite kann sich quer zur Länge oder Längsrichtung L und zur Höhe der Federeinrichtungen 23 erstrecken.

Gemäß Figur 1 überragen die Federeinrichtungen 23 oder eine Federeinrichtung 23 zusammen mit einem Schnapper 71 einer lösbaren Schnappverbindung 7 der Steckschließe 1 in Längsrichtung L die Führungseinrichtung 22 oder einen Führungsfinger 22A, 22B der Führungseinrichtung 22. Die Federeinrichtungen 23 können in Längsrichtung L eine Länge aufweisen, die höchstens 120 % der Länge der Führungseinrichtung 22 oder eines Führungsfingers 22A, 22B der Führungseinrichtung 22in Längsrichtung L entspricht. Somit ist die Verbindung sowie auch das Einfädeln zwischen Stecker 2 und Steckeraufnahme 3 verbesserbar.

Außerdem weisen die Federeinrichtungen 23 oder eine Federeinrichtung 23 zusammen mit einem Schnapper 71 einer lösbaren Schnappverbindung 7 der Steckschließe 1 eine maximale Breite in Breitenrichtung auf, die wenigstens 90% der Breite der Führungseinrichtung 22 oder eines Führungsfingers 22A, 22B der Führungseinrichtung 22in Breitenrichtung entspricht. Somit kann die Stabilität der Steckschließe 1 erhöht werden.

Gemäß den Figuren 1 bis 7 weist der Stecker 2 zwei Betätigungseinrichtungen 4, 5 zum Lösen der Verbindung von Stecker 2 und Steckeraufnahme 3 auf. Insbesondere kann der Stecker 2 der Steckschließe 1 eine erste Betätigungseinrichtung 4 und eine zweite Betätigungseinrichtung 5 aufweisen, mit welchen die Verbindung von Stecker 2 und Steckeraufnahme 3 lösbar ist.

Jede Betätigungseinrichtung 4, 5 kann eine Höhe in Höhenrichtung aufweisen, die wenigstens 50 % der Länge der Federeinrichtung 23 oder der Länge, zusammengesetzt aus einer Federeinrichtung 23 und einem Schnapper 71 einer lösbaren Schnappverbindung 7 der Steckschließe 1, in Längsrichtung L entspricht.

Des Weiteren weisen die Betätigungseinrichtungen 4, 5 jeweils eine Betätigungsfläche 6 zur manuellen Betätigung durch einen Nutzer auf. Dabei kann die Betätigungsfläche 6 während einer Relativbewegung von Stecker 2 und Steckeraufnahme 3 ausgehend von einer zusammengefügten oder verbundenen Stellung bis in eine vollständig getrennte Stellung von Stecker 2 und Steckeraufnahme 3 permanent oder während des kompletten Lösevorgangs durch einen Nutzer kontaktierbar sein oder bleiben. Somit kann über den gesamten Löse- beziehungsweise Öffnungsvorgang ein Nutzer die Kontrolle auf die Betätigungseinrichtungen 4, 5 ausüben, und über den gesamten Lösevorgang die Betätigungsfläche 6 ohne Unterbrechung kontaktieren.

Folglich ist der Stecker 2 während des Lösevorgangs der Steckschließe 1 in der Hand eines Nutzers haltbar. Somit ist ein permanentes Halten und Kontrollieren des Steckers 2 der Steckschließe 1 während des Öffnens der Steckschließe 1 gewährleistet, was einen entscheidenden Vorteil bei der Handhabung bietet. Zudem bedarf es weder des Einsatzes zweier Hände eines Nutzers noch eines Umgreifens einer Hand. Vielmehr ist die erfindungsgemäße Steckschließe 1 mit einer Hand eines Nutzers öffenbar, ohne dass der Stecker 2 losgelassen werden muss, um den Löse- beziehungsweise Öffnungsvorgang oder gar einen Schließvorgang zu vollenden.

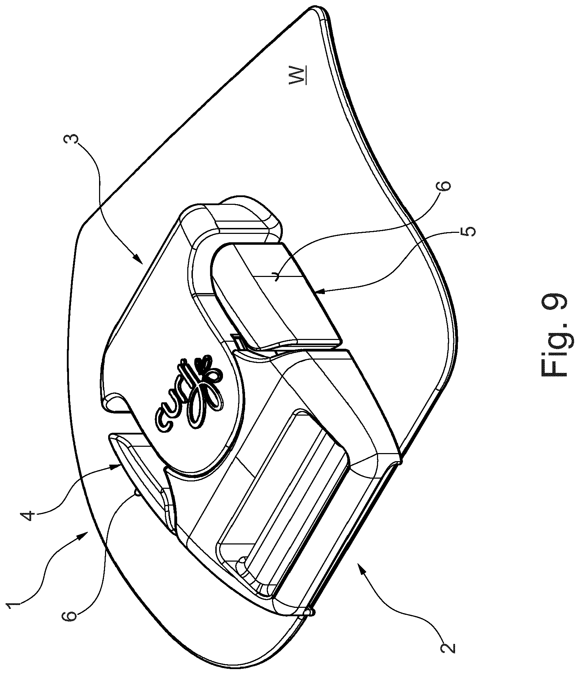

Mit Blick auf Figur 9 ist ersichtlich, dass jede Betätigungsfläche 6 höher als die Öffnung oder der Innenraum der Steckeraufnahme 3 ist. So weist jede Betätigungsfläche 6 oder jede Betätigungseinrichtung 4, 5 eine Höhe auf, die mit der Höhe der Steckeraufnahme 3 korrespondiert, sodass die Betätigungseinrichtungen 4, 5 uneinführbar in die Öffnung oder den Innenraum der Steckeraufnahme 3 sind. Anders ausgedrückt, sind die Druckknöpfe beziehungsweise die Betätigungseinrichtungen 4, 5 höher als der Innenraum, wodurch diese bei bestimmungsgemäßer Verwendung der Steckschließe nicht in den Innenraum eingeführt werden können.

Beim Einführen des Steckers 2 in die Steckeraufnahme 3 oder beim Ausführen des Steckers 2 aus der Steckeraufnahme 3 ist mithin ein permanentes Kontaktieren der Betätigungsflächen 6 möglich ist. Dabei verbleiben die Betätigungsflächen 6 und die Betätigungseinrichtungen 4, 5 außerhalb der Steckeraufnahme 3. Dies gilt sowohl für eine verbundene Stellung als auch für eine vollständig getrennte Stellung.

Außerdem geht aus den Figuren 1 und 6 hervor, dass die Steckeraufnahme 3 drei aneinander angrenzende Seiten S1, S2, S3 oder Seitenflächen umfasst, die gemeinsam eine einzige Öffnung zum Einführen des Steckers 2 in einen Innenraum der Steckeraufnahme 3 bilden. Dabei ist die Öffnung ununterbrochen und an den drei aneinander angrenzende Seiten S1, S2, S3 umlaufend beziehungsweise entlang der angrenzenden Seiten S1, S2, S3 durchgehend offen ausgebildet. Diese Ausgestaltung erlaubt es die Betätigungseinrichtungen 4, 5 im Vergleich zum Stand der Technik größer und/oder großflächiger auszubilden, da beim Einführen des Steckers 2 in die Steckeraufnahme 3 oder beim Ausführen des Steckers 2 aus der Steckeraufnahme 3 ein permanentes Kontaktieren der Betätigungsflächen 6 möglich ist. Die Betätigungsflächen 6 und die Betätigungseinrichtungen 4, 5 verbleiben außerhalb der Steckeraufnahme 3. Dies gilt sowohl für eine verbundene Stellung als auch für eine vollständig getrennte Stellung.

Zudem ist insbesondere aus den Figuren 5 bis 7 erkennbar, dass die Steckeraufnahme 3 - wie bereits angedeutet - in ihrem Inneren einen Innenraum aufweist. Dieser wird von mehreren Seiten S1-S6 und/oder Seitenflächen der Steckeraufnahme 3 eingegrenzt oder begrenzt. Dabei ist der Innenraum dazu ausgebildet und/oder dimensioniert, den Stecker 2 aufzunehmen.

Ferner zeigen genannte Figuren, dass zur Aufnahme des Steckers 2 die Steckeraufnahme 3 in ihrem Inneren zumindest abschnittsweise hohl ausgebildet ist beziehungsweise, dass der Innenraum zur Aufnahme des Steckers 2 zumindest abschnittsweise hohl ausgebildet ist. Somit ist die Aufnahme des Steckers 2 und die Realisierung einer verbundenen Stellung von Stecker 2 und Steckeraufnahme 3 möglich.

Wie bereits erwähnt, weist die Steckeraufnahme 3 drei aneinander angrenzende Seiten S1, S2, S3 oder Seitenflächen auf, die einen frei von seitlichen Begrenzungen ausgebildeten Zugang in den Innenraum der Steckeraufnahme 3 bilden.

Die Steckeraufnahme 3 weist drei aneinander angrenzende Seiten S1, S2, S3 oder Seitenflächen auf, die zusammen einen einzigen gemeinsamen Zugang in den Innenraum der Steckeraufnahme 3 bilden. Dabei sind von den drei aneinander angrenzenden Seiten S1, S2, S3 zwei gegenüberliegend angeordnet und die weitere Seite S1 verbindet die beiden gegenüberliegenden Seiten S2, S3 miteinander. Somit ist der Innenraum der Steckeraufnahme 3 von drei Seiten für die Aufnahme eines Steckers 2 der Steckschließe 1 ausgebildet und/oder zugänglich, vergleiche hierzu Figur 6.

Diese Ausgestaltung führt neben der vereinfachten Bedienung einer Steckschließe auch zu Materialeinsparungen. Im Gegensatz dazu ist mit Blick auf Figur 6 erkennbar, dass eine Basisabschnittsseite S6, eine Oberseite S4 und eine Unterseite S5 der Steckeraufnahme 3 undurchdringlich für den Stecker 2 ausgebildet sind. Über die genannten Seiten ist das Einführen des Steckers 2 in die Steckaufnahme 3 nicht möglich.

Gemäß Figur 6 hat die Steckeraufnahme 3 eine erste Riegelseite S2, eine zweite Riegelseite S3, eine Einführseite S1, eine Oberseite S4, eine Unterseite S5 und eine Basisabschnittsseite S6. Dabei grenzen die erste Riegelseite S2, die zweite Riegelseite S3 und die Einführseite S1 aneinander an und bilden gemeinsam eine einzige Öffnung in das Innere oder in den Innenraum der Steckeraufnahme 3. Bei der einzigen Öffnung bilden die erste Riegelseite S2, die zweite Riegelseite S3 und die Einführseite S1 einen gemeinsamen umlaufenden Rand. Zwischen der ersten Riegelseite S2, der zweiten Riegelseite S3 und der Einführseite S1 oder im Übergang von der ersten Riegelseite S2 zur Einführseite S1 und im Übergang von der zweiten Riegelseite S3 zur Einführseite S1 sind somit keinerlei Begrenzungen oder Ränder von Vorrichtungen, Einrichtungen oder Elementen der Steckeraufnahme 3 zu finden.

Diese Ausgestaltung gestattet einem Nutzer, über den gesamten Löse- beziehungsweise Öffnungsvorgang die Kontrolle auf die Betätigungseinrichtungen 4, 5 auszuüben und über den gesamten Lösevorgang die Betätigungsflächen 6 der Betätigungseinrichtungen 4, 5 ohne Unterbrechung zu kontaktieren. Analoges gilt für ein Zusammenfügen von Stecker 2 und Steckeraufnahme 3.

Die erste Riegelseite S2 und die zweite Riegelseite S3 sind gegenüberliegend und voneinander abgewandt angeordnet. Gleiches gilt für die Einführseite S1 und die Basisabschnittsseite S6 sowie für die Oberseite S4 und die Unterseite S5.

Gemäß Figuren 2, 3, 5 und 7 weist zur Aufnahme des Steckers 2 im Inneren oder im Innenraum der Steckeraufnahme 3 der Stecker 2 eine Führungseinrichtung 22 zum Zusammenführen von Stecker 2 und Steckeraufnahme 3 mit zwei freikragende Enden auf. Die Führungseinrichtung 22 dient dem korrekten Führen des Steckers 2 in die Steckeraufnahme 3, sodass ein sicheres Verrasten und Halten des Steckers 2 in der Steckeraufnahme 3 gewährleistbar ist. Zudem weist der Stecker 2 zwei Federeinrichtungen 23 zum sicheren Verrasten und Halten der Position des Steckers 2 in der Steckeraufnahme 3 auf, wie voranstehend erwähnt.

Die Führungseinrichtung 22 weist zu einem Mittelpunkt des Steckers 2 (nicht dargestellt) einen geringeren Abstand auf als die zwei Federeinrichtungen 23. Ferner weisen die zwei Federeinrichtungen 23 zu einem Mittelpunkt des Steckers 2 einen geringeren Abstand auf als die zwei Betätigungseinrichtungen 4, 5. Anders formuliert ist die Führungseinrichtung 22 im Vergleich zu den Federeinrichtungen 23 weiter innen im Stecker 2 angeordnet, wobei wiederum die Federeinrichtungen 23 im Vergleich zu den Betätigungseinrichtungen 4, 5 weiter innen im Stecker 2 angeordnet sind. Durch diese Anordnungen kann der Platz oder Raum, den der Stecker 2 bietet, optimal genutzt werden.

Außerdem zeigen die Figuren 2, 3, 5 und 7, dass die Führungseinrichtung 22 und die zwei Federeinrichtungen 23 im Innenraum der Steckeraufnahme 3 angeordnet sind, falls sich Stecker 2 und Steckeraufnahme 3 in einer verbundenen Stellung befinden oder miteinander verbunden oder verrastet sind. Dabei verbleiben in einer verbundenen Stellung von Stecker 2 und Steckeraufnahme 3 die Betätigungsflächen 6 außerhalb des Innenraums der Steckeraufnahme 3, sodass diese zur manuellen Betätigung durch einen Nutzer über den gesamten Lösevorgang und ohne Unterbrechung zugänglich sind (vgl. Figuren 5, 6, 7 und 9). Dies gewährleistet ein permanentes Halten und Kontrollieren des Steckers 2 während des Öffnens und/oder Schließens der Steckschließe 1, was einen Vorteil bei der Handhabung durch einen Nutzer bietet.

Wie in den Figuren 2 bis 5 dargestellt, sind die zwei Betätigungseinrichtungen 4, 5 und zwei Schnapper 71 einer lösbaren Schnappverbindung 7 der Steckschließe 1 in Längsrichtung L des Steckers 2 zueinander beabstandet. Auch sind die zwei Betätigungseinrichtungen 4, 5 näher an einem Basisabschnitt 21 des Steckers 2 angeordnet als die zwei Schnapper 71 der lösbaren Schnappverbindung 7. In beiden Fällen sind die Betätigungseinrichtungen 4, 5 und die Schnapper 71 in Längsrichtung L des Steckers 2 voneinander oder zueinander beabstandet.

Somit können die Schnapper 71 verhältnismäßig weit in die Steckeraufnahme 3 eingeführt werden, um ein sicheres Verschließen der Steckschließe 1 zu ermöglichen. Auch kann durch die versetzte Anordnung ein permanentes Halten und Kontrollieren des Steckers 2 während des Öffnens der Steckschließe 1, aber auch während des Schließens der Steckschließe gewährleistet werden.

In einer verbundenen Stellung von Stecker 2 und Steckeraufnahme 3 sind die zwei Betätigungseinrichtungen 4, 5 und die zwei Schnapper 71 der lösbaren Schnappverbindung 7 der Steckschließe 1 zum Lösen des Steckers 2 von der Steckeraufnahme 3 dazu dimensioniert und auch derart aufeinander abgestimmt, dass ein Spalt zwischen den zwei Betätigungseinrichtungen 4, 5 und der Steckeraufnahme 3 wenigstens einem Lösehub der lösbaren Schnappverbindung 7 entspricht. Dadurch ist der Formschluss zwischen Stecker 2 und Steckeraufnahme 3 in Längsrichtung L aufhebbar, vergleiche hierzu Figur 9. Ferner wird ein sicheres Eindrücken oder Betätigen der Betätigungseinrichtungen 4, 5 dergestalt ermöglicht, dass die lösbare Schnappverbindung 7 durch einen ausreichenden Lösehub sicher lösbar ist, um ein einfaches und schnelles Lösen beziehungsweise Öffnen der Steckschließe 1 in einer zusammengefügten oder verbundenen Stellung von Stecker 2 und Steckeraufnahme 3 zu ermöglichen.

Wie bereits ausgeführt, weist die Steckschließe 1 eine lösbare Schnappverbindung 7 zum wiederholbaren Lösen der Verbindung von Stecker 2 und Steckeraufnahme 3 auf, wobei Stecker 2 und Steckeraufnahme 3 die lösbare Schnappverbindung 7 bilden.

Dabei hat gemäß den Figuren 2, 3, 4 und 5 die lösbare Schnappverbindung 7 zwei Rasten 72, die zumindest teilweise geometrisch komplementär mit den zwei Schnappern 71 der lösbaren Schnappverbindung 7 ausgebildet sind. Genau genommen weist die Steckeraufnahme 3 die zwei Rasten 72 auf. Die Rasten 72 dienen zum Beispiel zum Verrasten mit einem Schnapper 71, wodurch die lösbare Schnappverbindung 7 Stecker 2 und Steckeraufnahme 3 voneinander lösen und auch wieder miteinander verbinden kann.

Wie in den Figuren 2 bis 5 gezeigt, wird jede Raste 72 von einem Basisabschnitt 31, von einem Oberabschnitt 32 und von einem Unterabschnitt 33 der Steckeraufnahme 3 gebildet. Die Rasten 72 sind unbeweglich beziehungsweise starr an dem Basisabschnitt 31 und dem Oberabschnitt 32 beziehungsweise an dem Basisabschnitt 31 und dem Unterabschnitt 33 der Steckeraufnahme 3 ausgebildet.

Außerdem ist jede Raste 72 im Innenraum der Steckeraufnahme 3 ausgebildet und an einer Innenseite 34 des Oberabschnitts 32 und an einer Innenseite 36 des Unterabschnitts 33 der Steckeraufnahme 3 ausgebildet. Durch diese Ausgestaltung kann die Steckeraufnahme 3 zum Beispiel mit einen Schnapper 71 der lösbaren Schnappverbindung 7 in ihrem Innenraum formschlüssig eingreifen, um einen sicheren Halt des Steckers 2 in der Steckeraufnahme 3 zu gewährleisten. Somit können die Rasten 72 vor Beschädigungen geschützt werden. Dabei werden die Rasten 72 also von mehreren Abschnitten gebildet und können auch von mehreren Seiten auf einen Schnapper 71 einwirken. Dadurch ist der Halt eines Schnappers 71 der lösbaren Schnappverbindung 7 mit den Rasten 72 verbesserbar.

Gemäß den Figuren 5 bis 7 sind die Rasten 72 hakenförmig und zum Hintergreifen von je einem Schnapper 71 der lösbaren Schnappverbindung 7 ausgebildet. Dabei hat jede Raste 72 einen Hinterschnitt 73 zum formschlüssigen Halten eines Schnappers 71 der lösbaren Schnappverbindung 7. Jeder Hinterschnitt 73 ist dem Basisabschnitt 31 der Steckeraufnahme 3 zugewandt. Dies ermöglicht einen sicheren Zusammenhalt von Stecker 2 und Steckeraufnahme 3 in einer verbundenen Stellung. Somit können die Rasten 72 vor Kräften, die im Gebrauch der Steckschließe 1 von außen auf die Steckeraufnahme 3 einwirken und die zu Beschädigungen führen können, geschützt werden.

Außerdem weist jede Raste 72 einen rampenförmigen Abschnitt 74 zur Auslenkung oder zum Einfedern eines Schnappers 71 der lösbaren Schnappverbindung 7 auf. Dabei wird der rampenförmige Abschnitt 74 von dem Basisabschnitt 31 und von dem Oberabschnitt 32 der Steckeraufnahme 3 beziehungsweise von dem Basisabschnitt 31 und von dem Unterabschnitt 33 der Steckeraufnahme 3 gebildet. Der rampenförmige Abschnitt 74 erleichtert das Einfedern eines Schnappers 71 der lösbaren Schnappverbindung 7, sodass dieser bei Erreichen des Endes des rampenförmigen Abschnitts 74 den Hinterschnitt 73 hintergreifen kann, um den Stecker 2 sicher an der Steckeraufnahme 3 zu halten.

Entsprechend den Figuren 5 bis 7 geht der rampenförmige Abschnitt 74 verrundet in den Unterabschnitt 33 oder in den Oberabschnitt 32 der Steckeraufnahme 3 sowie in den Basisabschnitt 31 der Steckeraufnahme 3 über. Dies erleichtert das Herstellen der Steckschließe 1 mittels eines Spritzgussverfahrens.

Wie bereits ausgeführt, umfasst jede Raste 72 einen Hinterschnitt 73, wobei der Hinterschnitt 73 vom Basisabschnitt 31 und vom Oberabschnitt 32 der Steckeraufnahme 3 beziehungsweise vom Basisabschnitt 31 und vom Unterabschnitt 33 der Steckeraufnahme 3 gebildet wird. Den Hinterschnitt der Raste 72 kann ein Schnapper 71 der lösbaren Schnappverbindung 7 hintergreifen, um den Stecker 2 sicher an der Steckeraufnahme 3 zu halten.

Aus den Figuren 5 bis 7 geht ferner hervor, dass der rampenförmige Abschnitt 74 und/oder der Hinterschnitt 73 in den Innenraum der Steckeraufnahme 3 vorspringt und dass der rampenförmige Abschnitt 74 vollständig im Innenraum der Steckeraufnahme 3 angeordnet ist. Zudem ist der rampenförmige Abschnitt 74 von einer Außenkante des Unterabschnitts 33 der Steckeraufnahme 3 versetzt in Richtung des Innenraums der Steckeraufnahme 3 angeordnet, vergleiche hierzu auch Figur 1. Somit können der rampenförmige Abschnitt 74 und der Hinterschnitt 73 vor äußeren Einflüssen geschützt und die Funktion der Steckschließe 1 kann sicher aufrechterhalten werden.

Ferner zeigen die Figuren 5 bis 7 eine erste obere Raste 72 und eine zweite untere Raste 72, wobei die erste und zweite Raste 72 übereinander und beabstandet zueinander angeordnet sind. Die erste Raste 72 ist am Oberabschnitt 32 der Steckeraufnahme 3 und die zweite Raste 72 am Unterabschnitt 33 der Steckeraufnahme 3 angeordnet. Somit können zwei übereinander angeordnete Rasten 72 einen Schnapper 71 der lösbaren Schnappverbindung 7 halten. Auch können einwirkende Kräfte, die Stecker 2 und Steckeraufnahme 3 in entgegengesetzte Richtung beanspruchen, besser aufgenommen und weitergeleitet werden.

Wie bereits ausgeführt weist die Steckschließe 1 eine lösbare Schnappverbindung 7 zum wiederholbaren Lösen der Verbindung von Stecker 2 und Steckeraufnahme 3 auf beziehungsweise bilden Stecker 2 und Steckeraufnahme 3 die lösbare Schnappverbindung 7.

Hierbei umfasst die lösbare Schnappverbindung 7 zwei Schnapper 71, wobei jeder Schnapper 71 zumindest teilweise geometrisch komplementär mit einer Raste 72 der lösbaren Schnappverbindung 7 ausgebildet ist und wobei der Stecker 2 die zwei Schnapper 71 aufweist. Mithilfe der Schnapper 71 kann der Stecker 2 zum Beispiel mit Rasten 72 der lösbaren Schnappverbindung 7 verrasten, sodass Stecker 2 und Steckeraufnahme 3 in einer verbundenen Stellung sind.

Gemäß den Figuren 2, 3 sowie 5, 6 ist jeder Schnapper 71 an einem freikragenden Ende einer Federeinrichtung 23 des Steckers 2 angeordnet. Dabei ist jeder Schnapper 71 unbeweglich oder starr an der Federeinrichtung 23 des Steckers 2 angeordnet. Die Federeinrichtung 23 kann einem Schnapper 71 ein Ein- und Ausfedern an zum Beispiel einer Raste 72 der lösbaren Schnappverbindung 7 gestatten beziehungsweise ermöglichen.

Jeder Schnapper 71 ist für den Innenraum der Steckeraufnahme 3 und hakenförmig ausgebildet. Somit ist ein Ein- und Ausrasten an zum Beispiel einer Raste 72 möglich. Ferner ist so also jeder Schnapper 71 zum Hintergreifen einer Raste 72 der lösbaren Schnappverbindung 7 ausgebildet, um Stecker 2 und Steckeraufnahme 3 formschlüssig zu verbinden.

Dabei weist jeder Schnapper 71 zwei Vorsprünge 75A, 75B zum formschlüssigen Halten oder Verrasten des Schnappers 71 an einer Raste 72 der lösbaren Schnappverbindung 7 auf. Jeder Vorsprung 75A, 75B hat eine Eingriffsfläche, die einem Basisabschnitt 21 des Steckers 2 zugewandt ist. Folglich ist ein Einrasten oder Hintergreifen des Steckers 2 oder der Schnapper 71 an zum Beispiel einer Raste 72 der lösbaren Schnappverbindung 7 auf einfache Weise möglich.

Jeder Vorsprung 75A, 75B überragt beidseitig die jeweilige Federeinrichtung 23 der Steckschließe 1. So stehen also die Vorsprünge 75A, 75B in einer Höhenrichtung beidseitig des Steckers 2 vor. So weist also jeder Schnapper 71 eine Form nach Art eines Hammerkopfs auf und hat eine rampenförmige Seitenfläche zum Entlanggleiten an dem rampenförmigen Abschnitt 74 einer Raste 72 der lösbaren Schnappverbindung 7.

Die rampenförmige Seitenfläche ist dabei zu einem rampenförmigen Abschnitt 74 einer Raste 72 der lösbaren Schnappverbindung 7 ausgerichtet und der ersten oder zweiten Riegelseite S2, S3 der Steckeraufnahme 3 zugewandt. Die rampenförmige Seitenfläche vereinfacht das Einstecken des Steckers 2 in die Steckeraufnahme 3. Denn die rampenförmige Seitenfläche bewegt beim Zusammenführen von Stecker 2 und Steckeraufnahme 3 den Schnapper 71 derart, dass dieser einfedert.

Mit Blick auf die Figuren 2, 3 sowie 5, 6 weist die lösbare Schnappverbindung 7 einen ersten Schnapper 71A und einen zweiten Schnapper 71B auf, wobei der erste Schnapper 71A und der zweite Schnapper 71B nebeneinander und beabstandet zueinander angeordnet sind. Somit kann eine stabile Verbindung von Stecker 2 und Steckeraufnahme 3 gewährleistet werden.

Des Weiteren umfasst die Steckschließe 1 eine Führungseinrichtung 22 zum Zusammenführen von Stecker 2 und Steckeraufnahme 3, wie bereits ausgeführt. Die Führungseinrichtung 22 springt von einem Basisabschnitt 21 des Steckers 2 vor und ist in Form zweier Gabelzinken ausgebildet. Die Führungseinrichtung 22 kann das Zusammenführen von Stecker 2 und Steckeraufnahme 3 nicht nur vereinfachen, sondern auch einen sicheren Halt des Steckers 2 in der Steckeraufnahme 3 gewährleisten oder dazu beitragen.

Gemäß den Figuren 1, 2, 3 und 5, 6, 7 weist die Führungseinrichtung 22 zwei zueinander beabstandete Führungsfinger 22A, 22B auf, die gesondert von den Schnappern 71A, 71B ausgebildet sind, wobei zwischen den Führungsfingern 22A, 22B ein Führungssteg 38 der Steckeraufnahme 3 einbringbar und führbar ist.

Die Führungseinrichtung 22 beziehungsweise die Führungsfinger 22A, 22B sind freikragend ausgebildet, wobei die freikragenden Enden der Führungsfinger 22A, 22B dazu ausgebildet sind, dass diese zusammen eine Trichterform bilden. Die Trichterform erleichtert ein Einführen eines Führungsstegs 38 der Steckeraufnahme 3. Somit gewährleistet die Trichterform eine einfaches Einführen beziehungsweise Einfädeln des Steckers 2 in die Steckeraufnahme 3.

An den freikragenden Enden der Führungsfinger 22A, 22B sind gegenüberliegende Seitenflächen der Führungsfinger 22A, 22B gegeneinander geneigt, um eine Trichterform zu bilden. Ferner ist an den freikragenden Enden der Führungsfinger 22A, 22B das breite Ende der Trichterform einer von den Führungsfingern 22A, 22B gebildeten Trichterform ausbildet. Zudem läuft die gebildete Trichterform von den freikragenden Enden der Führungsfinger 22A, 22B in Richtung eines Basisabschnitts 21 des Steckers 2 verengend zu. Mithilfe dieser Ausgestaltung ist das Einfangen eines Führungsstegs 38 der Steckeraufnahme 3 am offenen Ende der Trichterform auf einfache Weise möglich, wobei die zulaufende Trichterform eine im weiteren Verlauf der Trichterform genauere Führung des Führungsstegs 38 sicherstellen kann.

Dabei ist jeder Führungsfinger 22A, 22B brettförmig ausgebildet, wobei jeder Führungsfinger 22A, 22B eine Oberseite 22O, eine Unterseite 22U und weitere Seitenflächen aufweist, die die Oberseite 22O mit der Unterseite 22U verbinden.

Des Weiteren zeigen die Figuren 2, 3 und 7, dass die Führungseinrichtung 22 zwei Versteifungsrippen 24 zur Versteifung jeweils eines Führungsfingers 22A, 22B der Führungseinrichtung 22 hat. Dabei versteift jede Versteifungsrippe 24 quer zu einer Längsrichtung L der Führungseinrichtung 22 die Führungseinrichtung 22. Somit können Kräfte kompensiert und die Steckschließe 1 robuster ausgestaltet werden.

Zudem geht aus genannten Figuren hervor, dass jede Versteifungsrippe 24 von einem Basisabschnitt 21 des Steckers 2 vorspringt und sich in Längsrichtung L eines jeweiligen Führungsfingers 22A, 22B der Führungseinrichtung 22 erstreckt. Somit sind die Führungsfinger 22A, 22B gegen Biegung versteifbar, wodurch dieser robuster ausgestaltet ist und wodurch die Lebensdauer der Steckschließe 1 erhöhbar ist. Dabei ist jede Versteifungsrippe 24 mit einem Führungsfinger 22A, 22B der Führungseinrichtung 22 verbunden oder einstückig ausgebildet. Dies vereinfacht die Herstellung und verbessert die Stabilität der Führungseinrichtung.

Außerdem zeigen die Figuren 2, 3 und 7, dass sich jeweils eine Versteifungsrippe 24 über 50 Prozent der Länge der Führungseinrichtung 22 oder deren Führungsfinger 22A, 22B in Längsrichtung L erstreckt. Somit kann eine mechanisch stabile Ausführung bei geringem Materialaufwand geschaffen werden.

Dabei ist jeweils eine Versteifungsrippe 24 unterhalb eines Führungsfingers 22A, 22B der Führungseinrichtung 22 beziehungsweise an der Unterseite 22U eines Führungsfingers 22A, 22B der Führungseinrichtung 22 angeordnet. Somit verbessert sich die Widerstandfähigkeit gegen Biegung.

Wie insbesondere in Figur 7 gezeigt, weist jede Versteifungsrippe 24 eine Dicke, eine Höhe und eine Länge auf. Die Höhe erstreckt sich dabei senkrecht von einem Führungsfinger 22A, 22B der Führungseinrichtung 22 weg, wobei sich die Länge in Längsrichtung L und von einem Basisabschnitt 21 des Steckers 2 hin zu einem freikragenden Ende eines Führungsfingers 22A, 22B erstreckt. Die Breite erstreckt sich quer zur Länge oder Längsrichtung L und zur Höhe der Versteifungsrippe 24.

Mit Blick auf die Figuren 2, 3 und 7 ist erkennbar, dass jede Versteifungsrippe 24 in Längsrichtung L eine gleichbleibende Breite und eine gleichbleibende Höhe aufweist. Dabei zeigt Figur 7, dass jede Versteifungsrippe 24 in Seitenansicht rechteckförmig ausgebildet ist. Somit kann die mindestens eine Versteifungsrippe auf einfache Weise konstruktiv ausgestaltet werden. Es ist aber auch möglich, dass eine oder jede Versteifungsrippe 24 entsprechend des Momentenverlaufs eines freikragenden Trägers ausgebildet ist.

Zusätzlich oder alternativ ist es auch möglich, dass eine oder jede Versteifungsrippe 24 dreiecksförmig ausgebildet ist oder in Längsrichtung L eine abnehmende Höhe aufweist. Folglich können die Versteifungsrippen 24 nicht nur einfach, sondern auch materialsparend erstellt werden.

Figuren 1 bis 3 und 5 bis 7 zeigen, dass die Steckschließe 1 zwei Federeinrichtungen 23 zum sicheren Verrasten und Halten der Position des Steckers 2 in der Steckeraufnahme 3 aufweist. Dabei springen die Federeinrichtungen 23 von einem Basisabschnitt 21 des Steckers 2 vor.

Gemäß den vorgenannten Figuren dient die Federeinrichtung 23 zur Rückstellung eines Schnappers 71 einer lösbaren Schnappverbindung 7 der Steckschließe 1. Dabei sind die zwei Federeinrichtungen 23 zueinander hin einfederbar und voneinander weg zurückfederbar ausgebildet. Anders ausgedrückt ist jede Federeinrichtung 23 dazu ausgebildet, in eine Federrichtung einzufedern und in die zur Federrichtung entgegengesetzte Richtung zurückzufedern. Somit ist ein Schnapper 71 der lösbaren Schnappverbindung 7 hin und her bewegbar, wodurch dieser in der Steckeraufnahme 3 zum Beispiel einrasten oder einschnappen und dann auch wieder gelöst werden kann.

Insbesondere bei Blick auf Figuren 1, 3 und 5 ist zu erkennen, dass jede Federeinrichtung 23 eine Innenseite 23K und eine Außenseite 23L sowie eine Oberseite 23M und eine Unterseite 23N aufweist. Jede Federeinrichtung 23 ist dazu ausgebildet, dass diese in Richtung der Innenseite 23K einfederbar ist und dass die Innenseite 23K einem Führungsfinger 22A, 22B der Führungseinrichtung 22 des Steckers 2 gegenüberliegend und zugewandt angeordnet ist.

Dabei ist jede Federeinrichtung 23 als Kragarm ausgebildet, wobei am freikragenden Ende der Federeinrichtung 23 ein Schnapper 71 der lösbaren Schnappverbindung 7 angeordnet ist. Somit sind die Schnapper 71 hin und her bewegbar beziehungsweise federbar ausgestaltet. Der Schnapper 71 überragt die Abmaße der Federeinrichtung 23 in Richtung der Oberseite 23M und in Richtung der Unterseite 23N der Federeinrichtung 23, vergleiche Figuren 1, 3 und 5. Dies erleichtert und/oder verbessert den Eingriff eines Schnappers 71 an einer Raste 72 der lösbaren Schnappverbindung 7. Ferner ist der Schnapper 71 in Richtung der Außenseite 23L der Federeinrichtung 23 rampenförmig ausgebildet, vergleiche Figuren 1 bis 3. Somit kann der Schnapper 71 leichter von einer Raste 72 der lösbaren Schnappverbindung bewegt werden, um diesen hin zu einem Hinterschnitt 73 zu führen.

Aus den Figuren 5 bis 7 ist ersichtlich, dass jede Federeinrichtung 23 und die Führungseinrichtung 22 geometrisch dazu angeordnet und ausgebildet beziehungsweise dimensioniert sind, dass eine Federeinrichtung 23 in Richtung der Führungseinrichtung 22 einfedern und in die entgegengesetzte Richtung zurückfedern kann.

Genauer geschildert, kann jede Federeinrichtung 23 frei von geometrischen Restriktionen, insbesondere frei von geometrischen Restriktionen durch die Führungseinrichtung 22, in Richtung der Führungseinrichtung 22 einfedern und in die entgegengesetzte Richtung zurückfedern. Dabei sind jeweils eine Federeinrichtung 23 und ein Führungsfinger 22A, 22B der Führungseinrichtung 22 einander zugewandt gegenüberliegend angeordnet. Somit können sich die Federeinrichtungen 23 und die Führungseinrichtung 22 relativ zueinander bewegen, wobei sie sich nicht berühren oder in ihrer Bewegung behindern.

Es zeigen die Figuren 5 bis 7 ferner, dass jede Federeinrichtung 23 in einer ersten Höhenebene angeordnet ist und dass die Führungseinrichtung 22 in einer zweiten Höhenebene angeordnet ist. Zur Vergrößerung des Federwegs einer Federeinrichtung 23 sind die erste und zweite Höhenebene in einer Höhenrichtung des Steckers 2 versetzt zueinander angeordnet, sodass die Federeinrichtung 23 beim Einfedern unterhalb oder oberhalb eines Führungsfingers 22A, 22B der Führungseinrichtung 22 verschiebbar oder einfederbar ist.

Sowohl in einem eingefederten Zustand der Federeinrichtung 23 als auch in einem ausgefederten oder in einem unbelasteten und/oder kraftfreien Zustand sind Federeinrichtung 23 und Führungsfinger 22A, 22B der Führungseinrichtung 22, insbesondere kontaktlos, voneinander, zum Beispiel in Höhenrichtung, beabstandet. Somit kann der Einfluss resultierend aus einer relativen Bewegung von Federeinrichtung 23 zu Führungsfinger 22A, 22B der Führungseinrichtung 22 oder umgekehrt auf den jeweiligen anderen reduziert oder gar gänzlich verhindert werden.

Gemäß den Figuren 1 bis 7 ist jede Betätigungseinrichtung 4, 5 mithilfe einer Federeinrichtung 23 des Steckers 2 rückstellend ausgebildet. Dabei ist jede Betätigungseinrichtung 4, 5 mit einer Federeinrichtung 23 des Steckers 2 beziehungsweise mit einer Federeinrichtung 23 des Steckers 2 wirkverbunden und einstückig ausgebildet. Dadurch ist eine manuelle Betätigungskraft von den Betätigungseinrichtungen 4, 5 auf die Federeinrichtungen 23 des Steckers 2 übertragbar.

Zudem zeigen die erwähnten Figuren, dass jede Betätigungseinrichtung 4, 5 einen Verbindungsabschnitt 41 umfasst, der mit einer Federeinrichtung 23 des Steckers 2 verbunden und einstückig ausgebildet ist. Dabei beabstandet der Verbindungsabschnitt 41 die Federeinrichtung 23 des Steckers 2 und die Betätigungsfläche 6 zur manuellen Betätigung durch einen Nutzer voneinander. Somit kann eine manuelle Betätigungskraft von einer Betätigungseinrichtung 4, 5 auf die Federeinrichtung 23 übertragen werden. Genauer geschildert, ist jede Betätigungseinrichtung 4, 5 an einer Außenseite 23L einer Federeinrichtung 23 des Steckers 2 angeordnet. Dabei ist jede Betätigungseinrichtung 4, 5 in Form eines Druckknopfes ausgebildet. Somit sind die Betätigungseinrichtungen 4, 5 von einem Nutzer einfach zu erreichen und zu bedienen.

Wie in allen Figuren gezeigt, sind Stecker 2 und Steckeraufnahme 3 geometrisch komplementär ausgebildet, wobei der Stecker 2 und die Steckeraufnahme 3 jeweils einteilig ausgebildet sind. Die komplementäre Ausbildung gestattet ein sicheres Zusammenfügen von Stecker 2 und Steckeraufnahme 3 sowie einen sicheren und stabilen Halt des Steckers 2 in der Steckeraufnahme 3.

In Figuren 1 bis 6 ist dargestellt, dass die Steckeraufnahme 3 - wie bereits ausgeführt - einen Basisabschnitt 31 aufweist, ausgebildet zur Befestigung an einem zweiten Verbindungspartner Y oder an einer Oberfläche eines Textiles, vergleiche auch Figuren 7 und 8.

Des Weiteren zeigen die Figuren 1 bis 7, aber insbesondere die Figuren 1, 5, 6 und 7, dass die Steckeraufnahme 3 einen Oberabschnitt 32 und einen Unterabschnitt 33 aufweist, die jeweils von dem Basisabschnitt 31 aus in die gleiche Richtung vorspringen.

So springt also der Oberabschnitt 32 von dem Basisabschnitt 31 vor und ist in Form einer Zunge ausgebildet, wobei der Oberabschnitt 32 balkenförmig und einstückig mit dem Basisabschnitt 31 ausgebildet ist. Dabei weist der Oberabschnitt 32 eine Innenseite 34 und eine Außen- oder Oberseite 35 auf, wobei an der Innenseite 34 eine Raste 72 der lösbaren Schnappverbindung 7 der Steckschließe 1 ausgebildet ist, vergleiche hierzu Figur 4.

Auch springt der Unterabschnitt 33 von dem Basisabschnitt 31 vor und ist in Form einer Zunge ausgebildet, wobei der Unterabschnitt 33 balkenförmig und einstückig mit dem Basisabschnitt 31 ausgebildet ist. Dabei weist der Unterabschnitt 35 eine Innenseite 36 und eine Außen- oder Unterseite 37 auf, wobei an der Innenseite 36 eine Raste 72 einer lösbaren Schnappverbindung 7 der Steckschließe 1 ausgebildet ist, vergleiche Figur 4.

Im Ergebnis sind also der Oberabschnitt 32 und der Unterabschnitt 33 jeweils mit dem Basisabschnitt 31 einstückig verbunden ausgebildet und zueinander beabstandet angeordnet, sodass dazwischen der Innenraum ausgebildet werden kann. Auch sind die Außenseiten 35, 37 des Oberseite 32 und des Unterabschnitts 33 oder die Oberseite 35 des Oberabschnitts 32 und die Unterseite 37 des Unterabschnitts 33 voneinander beabstandet.

Des Weiteren weist die Steckeraufnahme 3 einen Führungssteg 38 auf, insbesondere zur Führung des Steckers 2. Folglich kann beim Zusammenführen von Stecker 2 und Steckeraufnahme 3 der Stecker 2 von der Steckeraufnahme 3 geführt werden. Dabei ist der Führungssteg 38 derart ausgebildet, dass dieser von der Führungseinrichtung 22 beziehungsweise von Führungsfingern 22A, 22B der Führungseinrichtung 22 führbar ist.

Zwischen Ober- und Unterabschnitt 32, 33 der Steckeraufnahme 3 ist - wie schon erläutert - ein Innenraum ausgebildet, der abschnittsweise von dem Führungssteg 38 der Steckeraufnahme 3 unterteilt ist.

Dabei verbindet der Führungssteg 38 den Ober- und Unterabschnitt 32, 33 der Steckeraufnahme 3 miteinander und stützt diese zueinander ab. Der Führungssteg 38 verbindet den Oberabschnitt 32, den Unterabschnitt 33 und den Basisabschnitt 31 der Steckeraufnahme 3 miteinander. Somit kann die Steckeraufnahme 3 mechanisch stabil ausgebildet werden.

Gemäß den Figuren 4 bis 7 sind der Oberabschnitt 32, der Unterabschnitt 33 und die Steckeraufnahme 3 im Querschnitt gesehen gemeinsam nach Art eines Doppel-T-Trägers oder nach Art eines I-Profils ausgebildet. Diese Ausgestaltung erhöht die Stabilität gegen äußere, einwirkende Kräfte. Dabei ist der Führungssteg 38 an der Innenseite 34 des Oberabschnitts 32 und an der Innenseite 36 des Unterabschnitts 33 angeordnet. Ferner springt der Führungssteg 38 von dem Basisabschnitt 31 vor und ist stützwandförmig ausgebildet. Ferner ist der Führungssteg 38 mittig, insbesondere mittig in Draufsicht auf die Steckeraufnahme 3, am Oberabschnitt 32 und am Unterabschnitt 33 sowie am Basisabschnitt 31 angeordnet. Somit kann die mechanische Stabilität der Steckeraufnahme erhöht werden.

Des Weiteren zeigen die Figuren 4 bis 7 sowie Figur 9, dass jede Seite der Steckeraufnahme 3 von einer Freiformfläche gebildet ist und dass die Einführseite S1 der Steckeraufnahme 3 wenigstens zwei gegenüberliegende Kanten aufweist, die unterschiedlich geformt sind, vergleiche insbesondere Figur 6.

Hierbei weist gemäß Figur 6 die Einführseite S1 der Steckeraufnahme 3 eine Oberkante, die konvex ausgebildet ist, und eine Unterkante auf, die geradflächig oder eben ausgebildet ist. Die Oberkante von Oberseite S4 und Einführseite S1 der Steckeraufnahme 3 kann konvex ausgebildet sein und die Unterkante von Unterseite S5 und Einführseite S1 der Steckeraufnahme 3 kann geradlinig oder eben ausgebildet sein.

Des Weiteren weisen die erste und zweite Riegelseite S2, S3 der Steckeraufnahme 3 wenigstens zwei gegenüberliegende Kanten auf, die unterschiedlich geformt sind. So weist jede Riegelseite S2, S3 eine Oberkante, die S-förmig ausgebildet ist, und eine Unterkante auf, die L-förmig ausgebildet ist.

Wie in Figur 6 zu erkennen, ist eine gemeinsame Kante von Oberseite S4 und Riegelseite S2, S3 der Steckeraufnahme 3 S-förmig ausgebildet, wobei die gemeinsame Kante von Oberseite S4 und Riegelseite S2, S3 der Steckeraufnahme 3 in die gemeinsame Kante von Oberseite S4 und Einführseite S1 übergeht.

Außerdem zeigt Figur 6, dass eine gemeinsame Kante von Unterseite S5 und Riegelseite S2, S3 der Steckeraufnahme 3 L-förmig ausgebildet ist und dass eine gemeinsame Kante von Unterseite S5 und Riegelseite S2, S3 der Steckeraufnahme 3 einen Stoß bildet, der winklig oder rechtwinklig ausgebildet ist.

Die Basisabschnittsseite S6 der Steckeraufnahme 3 wird von dem Basisabschnitt 31 der Steckeraufnahme 3 gebildet und ist gekrümmt oder konvex ausgebildet. Dabei ist die Basisabschnittsseite S6 zumindest abschnittsweise zylindermantelflächenförmig geformt.

Ferner ist gemäß Figur 6 die Oberseite S4 der Steckeraufnahme 3 gekrümmt oder konvex ausgebildet, wobei die Oberseite S4 mit der Basisabschnittsseite S6 verrundet ist.

Zudem ist die Unterseite S5 der Steckeraufnahme 3 eben ausgebildet, wobei die Unterseite S5 und die Basisabschnittsseite S6 einen Stoß bilden, der winklig oder rechtwinklig ausgebildet ist.

Aus den Figuren 1 und 5 bis 7 ist ersichtlich, dass eine Oberseite S4 der Steckeraufnahme 3 eine kleinere Fläche aufweist als die Unterseite S5. Dabei weist die Unterseite S5 der Steckeraufnahme 3 eine Flächenerstreckung auf, die mindestens 20% größer ist als die Flächenerstreckung der Oberseite S4 der Steckeraufnahme 3. Diese Ausgestaltung erlaubt eine formstabile und auch mechanisch stabile Steckeraufnahme 3 bei gleichzeitigem minimalen Materialeinsatz.

Wie bereits schon ausgeführt, weist der Stecker 2 einen Basisabschnitt 21 auf, ausgebildet zur Befestigung an einem ersten Verbindungspartner X. Zudem hat der Basisabschnitt 21 einen Schnallensteg, an welchem ein erster Verbindungspartner X befestigbar ist.

Gemäß Figur 6 wird der Stecker 2 von mehreren Seiten S7-S12 oder Seitenflächen eingegrenzt oder begrenzt. Dabei umfasst der Stecker 2 drei aneinander angrenzende Seiten S7, S8, S9 oder Seitenflächen, die gemeinsam einen Zugang hin zu einem Mittelpunkt des Steckers 2 bilden. Von den drei aneinander angrenzenden Seiten S7, S8, S9 sind zwei gegenüberliegend angeordnet und die weitere Seite S7 verbindet die beiden gegenüberliegenden Seiten S8, S9 miteinander. Dadurch ist das Innere des Steckers 2 von drei Seiten in eine Steckeraufnahme 3 der Steckschließe 1 einbringbar, insbesondere ohne die Betätigungseinrichtungen 4, 5, die außerhalb der Steckeraufnahme 3 verbleiben.

Des Weiteren weist der Stecker 2 eine erste Betätigungsseite S8, eine zweite Betätigungsseite S9, eine Einsteckseite S7, eine Oberseite S10, eine Unterseite S11 und eine Basisabschnittsseite S12 auf. Insbesondere die erste Betätigungsseite S8, die zweite Betätigungsseite S9 und die Einsteckseite S7 grenzen aneinander an und bilden gemeinsam einen Zugang in das Innere des Steckers 2.

Wie in Figur 6 gezeigt, sind die erste Betätigungsseite S8 und die zweite Betätigungsseite S9 gegenüberliegend und zueinander abgewandt angeordnet. Die Einsteckseite S7 und die Basisabschnittsseite S12 sind gegenüberliegend und voneinander abgewandt angeordnet. Die Oberseite S10 und die Unterseite S11 können gegenüberliegend angeordnet sind. Hierbei ist jede Seite des Steckers 2 von einer Freiformfläche gebildet, wobei die erste und zweite Betätigungsseite S8, S9 konvex ausgebildet sind.

Die erste und zweite Betätigungsseite S8, S9 werden von je einer Betätigungsfläche 6 gebildet. Die Basisabschnittsseite S12 wird von einem Basisabschnitt 21 des Steckers 2 gebildet, wobei die Basisabschnittsseite S12 gekrümmt oder konvex ausgebildet ist.

Zusammenfassend kann für die Figuren 1 bis 7 festgehalten werden, dass die Steckeraufnahme 3 für eine Steckschließe 1 drei aneinander angrenzende Seiten S1, S2, S3 oder Seitenflächen aufweist, die gemeinsam eine einzige Öffnung zum Einführen eines Steckers 2 einer Steckschließe 1 in einen Innenraum der Steckeraufnahme 3 bilden. Dabei ist die Öffnung insbesondere ununterbrochen und/oder an den drei aneinander angrenzenden Seiten S1, S2, S3 umlaufend und/oder durchgehend offen ausgebildet. Somit bilden die drei aneinander angrenzende Seiten S1, S2, S3 eine einzige zusammenhängende Öffnung für die Aufnahme des Steckers 2 im Innenraum der Steckeraufnahme 3. Ferner kann über den gesamten Lösevorgang eines Steckers 2 von der Steckeraufnahme 3 ein Nutzer die Kontrolle auf den Stecker 2 ausüben, und diesen über den gesamten Lösevorgang kontaktieren.

Ferner weist die Steckeraufnahme 3 für eine Steckschließe 1 einen Oberabschnitt 32 und Unterabschnitt 33 sowie einen Führungssteg 38 zur Führung eines Steckers 2 einer Steckschließe 1 auf, wobei der Führungssteg 38 den Oberabschnitt 32 und den Unterabschnitt 33 miteinander verbindet. Somit kann eine Führung eines Steckers 2 beim Einführen in die Steckeraufnahme 3 realisiert werden. Auch kann die Steckeraufnahme 3 mechanisch stabil ausgebildet werden.

Ferner kann festgehalten werden, dass der Stecker 2 für eine Steckschließe 1 eine Führungseinrichtung 22 zum Zusammenführen von Stecker 2 und Steckeraufnahme 3 beziehungsweise zur Führung der Steckeraufnahme 3 aufweist, wobei die Führungseinrichtung 22 zwei freikragende Enden hat. Die Führungseinrichtung 22 dient dem korrekten Führen des Steckers 2 in eine Steckeraufnahme 3, sodass ein sicheres Verrasten und Halten des Steckers 2 in einer Steckeraufnahme 3 gewährleistbar ist.

Dabei weist die Führungseinrichtung 22 zu einem Mittelpunkt des Steckers 2 einen geringeren Abstand auf als eine Federeinrichtung 23 zum sicheren Verrasten und Halten der Position des Steckers 2 in einer Steckeraufnahme 3. Außerdem weist die Federeinrichtung 23 zum sicheren Verrasten und Halten der Position des Steckers 2 zu einem Mittelpunkt des Steckers 2 einen geringeren Abstand auf als eine Betätigungseinrichtung 4, 5 zum Lösen einer Verbindung des Stecker 2 und einer Steckeraufnahme 3. Durch diese Anordnung kann der Platz, den der Stecker bietet, optimal genutzt werden.

Figur 8 zeigt eine räumliche Darstellung eines Geschirrs 100 für ein Haustier mit zwei Steckschließen 1 gemäß den Figuren 1 bis 7. Figur 9 zeigt eine räumliche Darstellung einer Steckschließe 1 aus Figur 8 in einer verbundenen Stellung. Beide Figuren werden nachstehend der Einfachheit halber gemeinsam beschrieben.

Gemäß Figur 8 weist das Geschirr 100 neben zwei Steckschließen 1 einen in Form auf ein Haustier angepasstes Textil Z auf. Das Textil Z ist derart geformt, dass dieses ein vorderes Ende 101 mit einem Kopfdurchlass für ein Haustier und ein hinteres Ende 102 zum Umschließen einer Brust- und/oder Bauchpartie eines Haustiers aufweist. Das vordere Ende 101 beziehungsweise der Kopfdurchlass ist im Wesentlichen kreisringförmig ausgestaltet. Gleiches gilt für das hintere Ende, allerdings nur in einer verbundenen Stellung von Stecker 2 und Steckeraufnahme 3 der Steckschließen 1.

Zwischen dem vorderen Ende 101 und dem hinteren Ende 102 ist ein erster Verbindungsabschnitt 103A mit einem Haltegriff 104 angeordnet. Dabei verbindet der erste Verbindungsabschnitt 103A die beiden Enden 101, 102. Gleiches gilt für einen zweiten Verbindungsabschnitt 103B, der in Figur 8 hinter dem ersten angeordnet ist und nicht erkennbar ist.

Gemäß Figur 8 sind am hinteren Ende 102 zwei Steckschließen 1 angeordnet.

Während jeweils ein Stecker 2 an einem ersten Verbindungspartner X befestigt ist, ist jeweils eine Steckeraufnahme 3 an einem zweiten Verbindungspartner Y befestigt. Es handelt sich bei dem ersten Verbindungspartner X um ein Riemenende eines Riemens 105. Bei dem zweiten Verbindungspartner Y kann es sich um einen Abschnitt des Textils Z oder um eine Platte W handeln, die auf dem Textil Z befestigt ist. Das Textil Z kann das zweite Ende 102 bilden.

Der Riemen 105 ist durch eine Tasche geführt, die von dem Textil Z gebildet wird. Eine Steckschließe 1 aus Figur 8 ist in Figur 9 gezeigt. Hierbei ist die Steckeraufnahme 3 an der Platte W, die aus Kunststoff hergestellt ist, angeordnet. Beide können auch miteinander einstückig ausgebildet sein.

Gemäß Figur 8 ist die Außenkontur der Platte W an den Verlauf der Außenkontur des Textils Z angepasst. Mithin können die Außenkontur der Platte W und die Außenkontur das Textils Z zumindest abschnittsweise geometrisch aufeinander abgestimmt und/oder korrespondierend ausgebildet sein.

Ferner ist - wie in Figur 8 dargestellt - die Platte W zusammen mit dem Textil Z durch ein Einfassband geschützt, um ein Ausfasern des Textils Z an den Schnittkanten entlang der Außenkontur zu verhindern.

Dabei kann das Einfassband zusammen mit der Platte W außenseitig beziehungsweise entlang der Kontur direkt mit dem Textil Z vernäht sein. Mithin kann in der dargestellten Ausführung gemäß Figur 8 die Anzahl von Nähten reduziert werden, da außenseitig die Naht des Einfassbandes zur Befestigung der Platte W mitgenutzt wird. Somit kann der Herstellungsaufwand reduziert werden.

Innenseitig des Textils Z kann die Platte direkt mit dem Textil Z vernäht sein, da innenseitig ein Einfassband nicht vorgesehen ist. Das Einfassband verläuft entlang der Außenkontur beziehungsweise Außenkante des Textils Z.

Die Platte W ist gesondert mit einer Steckschließe 1 in Figur 9 dargestellt.

Insbesondere die nach Figuren 8 und 9 vorgestellte Ausführung benötigt Steckschließen 1 wie zuvor geschildert, da diese sehr große Betätigungsflächen 6 für Finger eines Nutzers bilden, vergleiche Figur 9. Durch das seitliche Vorstehen der Platte W relativ zu den übrigen Abschnitten der Steckeraufnahme 3 ist die Zugänglichkeit zu den Betätigungseinrichtungen 3, 4 eingeschränkt, sodass die verhältnismäßig groß beziehungsweise hoch ausgeführten Betätigungseinrichtungen 3, 4 wiederum eine gute Erreichbarkeit gewährleisten und damit die Benutzung beziehungsweise Handhabung des Geschirrs 100 vereinfachen.

### BEZUGSZEICHENLISTE

- 1: Steckschließe
- 2: Stecker
- 3: Steckeraufnahme
- 4: erste Betätigungseinrichtung
- 5: zweite Betätigungseinrichtung
- 6: Betätigungsfläche
- 7: lösbare Schnappverbindung
- 21: Basis des Steckers
- 22: Führungseinrichtung
- 22A: Führungsfinger
- 22B: Führungsfinger
- 22O: Oberseite
- 22U: Unterseite
- 23: Federeinrichtung
- 23K: Innenseite
- 23L: Außenseite
- 23M: Oberseite
- 23N: Unterseite
- 24: Versteifungsrippe
- 31: Basisabschnitt der Steckeraufnahme
- 32: Oberabschnitt
- 33: Unterabschnitt
- 34: Innenseite
- 35: Außen- oder Oberseite
- 36: Innenseite
- 37: Außen- oder Unterseite
- 38: Führungssteg
- 71: Schnapper der lösbaren Schnappverbindung
- 71A: erster Schnapper
- 71B: zweiter Schnapper
- 72: Raste der lösbaren Schnappverbindung
- 73: Hinterschnitt
- 74: rampenförmiger Abschnitt
- 75A: Vorsprung
- 75B: Vorsprung
- 100: Geschirr
- 101: vorderes Ende
- 102: hinteres Ende
- 103A: erster Verbindungsabschnitt
- 103B: zweiter Verbindungsabschnitt
- 104: Haltegriff
- 105: Riemen
- S1: Einführseite
- S2: erste Riegelseite
- S3: zweite Riegelseite
- S4: Oberseite
- S5: Unterseite
- S6: Basisabschnittsseite
- S7: Einsteckseite
- S8: erste Krafteinwirkungsseite
- S9: zweite Krafteinwirkungsseite
- S10: Oberseite
- S11: Unterseite
- S12: Basisabschnittsseite
- W: Platte
- X: erster Verbindungspartner
- Y: zweiter Verbindungspartner
- Z: Textil

## Patentansprüche

1. Steckschließe (1) oder Schnalle, insbesondere zum lösbaren Verbinden zweier Verbindungspartner (X, Y) oder zweier Textilabschnitte, mit einem Stecker (2), an welchem ein erster Verbindungspartner (X) befestigbar ist, und mit einer Steckeraufnahme (3), an welcher ein zweiter Verbindungspartner (Y) befestigbar ist, wobei der Stecker (2) zur lösbaren Verbindung in die Steckeraufnahme (3) einsteckbar ist, wobei der Stecker (2) eine Führungseinrichtung (22) zum Zusammenführen von Stecker (2) und Steckeraufnahme (3) aufweist, wobei der Stecker (2) mindestens eine Federeinrichtung (23) zum sicheren Verrasten und Halten der Position des Steckers (2) in der Steckeraufnahme (3) aufweist und wobei die Führungseinrichtung (22) in einer Höhenrichtung versetzt zur Federeinrichtung angeordnet ist.

2. Steckschließe (1) nach Anspruch 1, **dadurch gekennzeichnet, dass** die Führungseinrichtung (22) und die mindestens eine Federeinrichtung (23) gesondert und/oder separat ausgebildet sind und/oder voneinander in Breitenrichtung beabstandet sind.

3. Steckschließe (1) nach Anspruch 1 oder 2, **dadurch gekennzeichnet, dass** die Führungseinrichtung (22) zwei freikragende Enden aufweist, die bevorzugt gesondert und/oder separat von der mindestens einen Federeinrichtung (23) ausgebildet und/oder beabstandet sind.

4. Steckschließe (1) nach einem der vorangehenden Ansprüche, **dadurch gekennzeichnet, dass** die mindestens eine Federeinrichtung (23) in einer ersten Höhenebene angeordnet ist und dass die Führungseinrichtung (22) in einer zweiten und/oder dritten Höhenebene angeordnet ist, wobei zur Vergrößerung des Federwegs der mindestens einen Federeinrichtung (23) die erste und/oder zweite und/oder dritte Höhenebene in einer Höhenrichtung des Steckers (2) versetzt zueinander angeordnet sind, und/oder dass die mindestens eine Federeinrichtung (23) beim Einfedern in einer Breitenrichtung, in Höhenrichtung unterhalb oder oberhalb der Führungseinrichtung (22) und/oder eines Führungsfingers (22A, 22B) der Führungseinrichtung (22) und/oder zwischen zwei Führungsfingern (22A, 22B) der Führungseinrichtung (22), schiebbar und/oder bewegbar ist.

5. Steckschließe (1) nach einem der vorangehenden Ansprüche, **dadurch gekennzeichnet, dass** sowohl in einem eingefederten Zustand der mindestens einen Federeinrichtung (23) als auch in einem ausgefederten oder in einem unbelasteten und/oder kraftfreien Zustand die mindestens eine Federeinrichtung (23) und die Führungseinrichtung (22), insbesondere kontaktlos, voneinander beabstandet sind.

6. Steckschließe (1) nach einem der vorstehenden Ansprüche, **dadurch gekennzeichnet, dass** der Stecker (2) mindestens eine Betätigungseinrichtung (4, 5) zum Lösen der Verbindung von Stecker (2) und Steckeraufnahme (3) aufweist, wobei die mindestens eine Betätigungseinrichtung (4, 5) eine Betätigungsfläche (6) zur manuellen Betätigung durch einen Nutzer aufweist und die Betätigungsfläche (6) während einer Relativbewegung von Stecker (2) und Steckeraufnahme (3) ausgehend von einer verbundenen Stellung bis in eine vollständig getrennte Stellung von Stecker (2) und Steckeraufnahme (3) permanent oder während des kompletten Lösevorgangs durch einen Nutzer kontaktierbar bleibt.

7. Steckschließe (1) nach Anspruch 6, **dadurch gekennzeichnet, dass** die mindestens eine Betätigungseinrichtung (4, 5) einen Verbindungsabschnitt (41) aufweist, der mit mindestens einer Federeinrichtung (23) des Steckers (2) verbunden und/oder einstückig ausgebildet ist, und/oder dass die mindestens eine Betätigungseinrichtung (4, 5) einen Verbindungsabschnitt (41) aufweist, der die mindestens eine Federeinrichtung (23) des Steckers (2) und die Betätigungsfläche (6) zur manuellen Betätigung durch einen Nutzer voneinander beabstandet.

8. Steckschließe (1) nach Anspruch 7, **dadurch gekennzeichnet, dass** die mindestens eine Betätigungseinrichtung (4, 5) ausschließlich über den Verbindungsabschnitt (41) mit der mindestens einen Federeinrichtung (23) des Steckers (2) verbunden ist und/oder dass die mindestens eine Betätigungseinrichtung (4, 5) über einen einzigen Verbindungsabschnitt (41) mit der mindestens einen Federeinrichtung (23) des Steckers (2) verbunden ist und/oder dass die mindestens eine Betätigungseinrichtung (4, 5) ausschließlich über den Verbindungsabschnitt (41) und der mindestens einen Federeinrichtung (23) mit einem Basisabschnitt des Steckers (2) verbunden ist.

9. Steckschließe (1) nach einem der voranstehenden Ansprüche, **dadurch gekennzeichnet, dass** die Führungseinrichtung (22) mindestens eine Versteifungsrippe (24) zur Versteifung eines Führungsfingers (22A, 22B) der Führungseinrichtung (22) aufweist und/oder dass die mindestens eine Versteifungsrippe (24) die Führungseinrichtung (22) quer zu einer Längsrichtung (L) versteift und/oder dass die mindestens eine Versteifungsrippe (24) in Höhenrichtung gesehen auf einer Oberseite und/oder einer Unterseite eines Führungsfingers (22A, 22b) angeordnet ist.

10. Steckschließe (1) nach einem der voranstehenden Ansprüche, **dadurch gekennzeichnet, dass** die mindestens eine Federeinrichtung (23) und/oder die mindestens eine Federeinrichtung (23) zusammen mit mindestens einem Schnapper (71) einer lösbaren Schnappverbindung (7) entlang einer Längsrichtung (L) die Führungseinrichtung (22) und/oder mindestens einen Führungsfinger (22A, 22B) der Führungseinrichtung (22) überragt, und/oder dass die mindestens eine Federeinrichtung (23) und/oder die mindestens eine Federeinrichtung (23) zusammen mit mindestens einem Schnapper (71) einer lösbaren Schnappverbindung (7) in Längsrichtung (L) eine Länge aufweist, die höchstens 150 % oder höchstens 140 % oder höchstens 130 % oder höchstens 120 % oder höchstens 110 % der Länge der Führungseinrichtung (22) und/oder der Länge mindestens eines Führungsfingers (22A, 22B) der Führungseinrichtung (22) in Längsrichtung (L) entspricht.

11. Steckschließe (1) nach einem der voranstehenden Ansprüche, **dadurch gekennzeichnet, dass** die mindestens eine Betätigungseinrichtung (4, 5) eine Höhe in Höhenrichtung aufweist, die wenigstens 50 % oder wenigstens 60 % oder wenigstens 70% oder wenigstens 80% oder wenigstens 90% der Länge der mindestens einen Federeinrichtung (23) und/oder der Länge, zusammengesetzt aus der mindestens einen Federeinrichtung (23) und mindestens einem Schnapper (71) einer lösbaren Schnappverbindung (7), in Längsrichtung (L) entspricht.

12. Steckschließe (1) nach einem der voranstehenden Ansprüche, **dadurch gekennzeichnet, dass** eine Unterseite (S5) und/oder ein Unterabschnitt (33) der Steckeraufnahme (3) auf einem Textil (Z) befestigt ist und/oder von einer Schale und/oder einer Platte (W), insbesondere aus Kunststoff, gebildet ist, wobei die Platte (W) bevorzugt eine größere Flächenerstreckung aufweist als eine Oberseite und/oder ein Oberabschnitt (32) der Steckeraufnahme (3) und/oder wobei die Platte (W) in Breitenrichtung die die mindestens eine Betätigungseinrichtung (4, 5) überragt.

13. Stecker (2) für eine Steckschließe (1), insbesondere nach einem der voranstehenden Ansprüche, mit einer Führungseinrichtung (22) zum Zusammenführen mit einer Steckeraufnahme (3) und mit mindestens eine Federeinrichtung (23) zum sicheren Verrasten und Halten der Position des Steckers (2) in einer Steckeraufnahme (3), wobei die Führungseinrichtung (22) in einer Höhenrichtung versetzt zur Federeinrichtung angeordnet ist.

14. Geschirr (100) für ein Haustier, insbesondere für einen Hund, mit mindestens einer Steckschließe (1) nach einem der Ansprüche 1 bis 12 und/oder mit einem Stecker nach Anspruch 13 und mit mindestens einem auf ein Haustier angepasstes Textil (Z) oder Ledermaterial, das ein vorderes Ende (101) mit einem Kopfdurchlass für ein Haustier und ein hinteres Ende (102) zum Umschließen einer Brust- und/oder einer Bauchpartie eines Haustiers aufweist.

15. Geschirr (100) für ein Haustier, insbesondere für einen Hund, mit mindestens einer Steckschließe (1) und mit mindestens einem auf ein Haustier angepasstes Textil (Z) oder Ledermaterial, das ein vorderes Ende (101) mit einem Kopfdurchlass für ein Haustier und ein hinteres Ende (102) zum Umschließen einer Brust- und/oder einer Bauchpartie eines Haustiers aufweist, wobei eine Steckeraufnahme (3) und/oder ein Stecker (2) der Steckschließe an einer Platte (W) angeordnet und/oder einstückig mit einer Platte (W) ausgebildet ist und wobei die Außenkontur der Platte (W) zumindest abschnittsweise mit dem Verlauf der Außenkontur des Textils Z und/oder des Ledermaterials korrespondiert.
